Europäisches Patentamt

European Patent Office

Office européen des brevets

(19)

(11) **EP 1 046 001 B1**

(12) **EUROPÄISCHE PATENTSCHRIFT**

(45) Veröffentlichungstag und Bekanntmachung des Hinweises auf die Patenterteilung:
**19.05.2004 Patentblatt 2004/21**

(21) Anmeldenummer: **99953719.4**

(22) Anmeldetag: **09.09.1999**

(51) Int Cl.$^7$: **F16H 61/02**, B60K 41/28

(86) Internationale Anmeldenummer:
**PCT/DE1999/002851**

(87) Internationale Veröffentlichungsnummer:
**WO 2000/023732 (27.04.2000 Gazette 2000/17)**

(54) **VORRICHTUNG UND VERFAHREN ZUR KOORDINIERTEN STEUERUNG DES ANTRIEBSSTRANGS EINES KRAFTFAHRZEUGS WÄHREND GETRIEBESCHALTVORGÄNGEN**

DEVICE AND METHOD FOR THE CO-ORDINATED CONTROL OF THE DRIVE TRAIN OF AN AUTOMOBILE DURING GEARSHIFT OPERATIONS

DISPOSITIF ET PROCEDE POUR LA COMMANDE COORDONNEE DE LA TRANSMISSION D'UN VEHICULE AUTOMOBILE LORS DE CHANGEMENTS DE VITESSE

(84) Benannte Vertragsstaaten:
**DE ES FR IT**

(30) Priorität: **21.10.1998 DE 19848520**
**07.08.1999 DE 19937455**

(43) Veröffentlichungstag der Anmeldung:
**25.10.2000 Patentblatt 2000/43**

(73) Patentinhaber: **ROBERT BOSCH GMBH**
**70442 Stuttgart (DE)**

(72) Erfinder:
- **LOEFFLER, Juergen**
  **D-71364 Winnenden (DE)**
- **BOLZ, Martin-Peter**
  **D-71720 Oberstenfeld (DE)**
- **HUELSER, Holger**
  **D-70329 Stuttgart (DE)**

(56) Entgegenhaltungen:
EP-A2- 0 082 951          WO-A1-96/31359
DE-A1- 19 625 935        DE-A1- 19 703 863
US-A- 5 351 776

**Beschreibung**

Stand der Technik

Die Erfindung betrifft eine System und ein Verfahren zur koordinierten Steuerung des Antriebsstrangs eines Kraftfahrzeugs während Getriebeschaltvorgängen mit den Merkmalen der unabhängigen Ansprüche. Ein System (bzw. Verfahren) nach dem Oberbegriff des Anspruchs 1 (bzw. 11) ist aus WO 96/31359 bekannt.

Bei Fahrzeugen mit einem automatisierten Schaltgetriebe und einer elektronisch betätigten Kupplung erfolgt ein automatisierter Gangwechsel durch Ansteuerung der Komponenten Motor, Kupplung und Getriebe. Hierbei sollen diese Komponenten geeignet angesteuert werden, so daß der Gangwechsel möglichst schnell und dabei aber auch komfortabel erfolgt.

Der Soll-Getriebegang wird geeignet ermittelt, z.B. durch Schaltkennlinien oder durch andere Verfahren, wie sie z.B. in der DE 196 25 935 A oder DE 197 03 863 A beschrieben sind. Weicht der so bestimmte Soll-Gang vom Ist-Getriebegang ab, so muß ein automatisierter Gangwechsel vorgenommen werden.

In bekannten Systemen erfolgt die Kontrolle des Schaltablaufes im wesentlichen durch die Kupplungssteuerung, die dabei Signale mit der Getriebesteuerung und der Motorsteuerung austauscht. Die Ermittlung des Fahrerwunschmomentes erfolgt in der Motorsteuerung. Während des Schaltvorgangs nimmt die Kupplungssteuerung Eingriffe in die Motorsteuerung vor, im wesentlichen um eine Reduktion des Motormomentes zu erreichen.

Die Aufgabe der Erfindung besteht in der Verbesserung der Koordinierung der einzelnen Komponenten des Antriebsstrangs während der Änderung der Getriebegänge.

Diese Aufgabe wird durch die Merkmale der unabhängigen Ansprüche gelöst.

Vorteile der Erfindung

Wie erwähnt betrifft die Erfindung die koordinierte Steuerung der im Antriebsstrang eines Kraftfahrzeugs angeordneten Elemente Servokupplung, Fahrzeugmotor und Getriebe während einer Änderung der Getriebeübersetzung. Hierbei sind jedem dieser Elemente des Antriebsstrangs eine Treiberstufe zugeordnet, die mit den Koordinationsmitteln verbunden ist. Erfindungsgemäß geben die Koordinationsmittel während der Änderung der Getriebeübersetzung der Motortreiberstufe Sollwerte zur Einstellung eines Motorausgangsmoments oder eines Kupplungseingangsmoments vor. Darüber hinaus geben die Koordinationsmittel der Kupplungstreiberstufe Sollwerte zur Einstellung eines maximal übertragbaren Kupplungsmoments vor. Weiterhin kommen von den Koordinationsmitteln zu der Getriebetreiberstufe Sollwerte zur Einstellung einer Getriebeübersetzung.

Durch die erfindungsgemäße Koordinierung der Ansteuerung der Antriebsstrangskomponenten sind schnelle und komfortable Getriebegangwechsel möglich.

In einer vorteilhaften Ausgestaltung der Erfindung ist vorgesehen, daß den Koordinationsmitteln erste Informationen über den Betriebszustand der Servokupplung und/oder zweite Informationen über den Betriebszustand des Getriebes und/oder dritte Informationen über den Betriebszustand des Verbrennungsmotors zugeleitet werden. Die Koordinationsmittel geben dann der Motortreiberstufe abhängig von den ersten, zweiten und/oder dritten Informationen Sollwerte zur Einstellung eines Motorausgangsmoments bzw. eines Kupplungseingangsmoments vor.

Die Änderung der Getriebeübersetzung findet im allgemeinen durch Ausrücken eines Startgetriebegangs und durch anschließendes Einrücken eines Zielgetriebegangs statt. Die Koordinationsmittel geben der Motortreiberstufe dann Sollwerte zur Einstellung einer Motorausgangsdrehzahl bzw. einer Getriebeeingangsdrehzahl vor, wenn der Startgetriebegang im Getriebe ausgerückt ist.

Geben die Koordinationsmittel die Drehzahl-Sollwerte vor, so ist insbesondere vorgesehen, daß die Ausgangsdrehzahl des Motors auf die Synchrondrehzahl des Zielgetriebegangs geregelt wird. Hierbei ist insbesondere bei Hochschaltvorgängen vorgesehen, daß durch den Motortreiber das maximal mögliche Motorschleppmoment eingestellt wird.

Anschließend geben die Koordinationsmittel der Motortreiberstufe dann wieder Sollwerte zur Einstellung eines Motorausgangsmoments bzw. eines Kupplungseingangsmoments vor, wenn der Zielgetriebegang eingerückt ist. Darüber hinaus kann vorgesehen sein, daß die Koordinationsmittel weiterhin der Kupplungstreiberstufe dann Sollwerte zur Einstellung eines maximal übertragbaren Kupplungsmoments vorgeben, wenn der Zielgetriebegang eingerückt ist.

Gemäß der Erfindung sind die Koordinationsmittel derart ausgestaltet, daß in Reaktion auf eine beabsichtigte Änderung der Getriebeübersetzung der Motortreiberstufe die Sollwerte zur Einstellung eines Motorausgangsmoments bzw. eines Kupplungseingangsmoments derart vorgegeben werden, daß das Motorausgangsmoment auf einen vorgegebenen oder vorgebbaren Wert reduziert wird. Hierbei ist insbesondere vorgesehen, daß die Reduzierung mittels eines vorgebbaren Verlaufs, insbesondere innerhalb einer vorgebbaren Zeitdauer, geschieht und der Verlauf oder die Zeitdauer abhängig von der Änderung der beabsichtigten Getriebeübersetzung vorgegeben ist. Die Reduzierung kann dabei innerhalb einer vorgebbaren Zeitdauer rampenförmig geschehen.

Der vorgebbare Verlauf der Reduzierung ist vorteilhafterweise abhängig

- vom Gangsprung, also von dem Start- und Zielgetriebegang,
- von der Leistungs- beziehungsweise Momentenanforderung des Fahrers,
- von der Fahrzeuggeschwindigkeit,
- vom Fahrertyp, beispielsweise verbrauchs- oder leistungsorientierter Fahrertyp,
- von der Fahrsituation, beispielsweise vom Fahrwiderstand, und/oder
- vom Betriebszustand der Aggregate, beispielsweise abhängig von der Motor- und/oder Kupplungstemperatur.

Weiterhin sind die Koordinationsmittel derart ausgestaltet, daß der Kupplungstreiberstufe die Sollwerte zur Einstellung eines maximal übertragbaren Kupplungsmoments abhängig von den Sollwerten zur Einstellung eines Motorausgangsmoments bzw. eines Kupplungseingangsmoments vorgegeben werden.
Vorteilhafterweise geben die Koordinationsmittel die Koordinationsmittel der Kupplungstreiberstufe die Sollwerte zur Einstellung eines maximal übertragbaren Kupplungsmoments derart vor, daß das maximal übertragbare Kupplungsmoment auf einen vorgegebenen oder vorgebbaren Wert erhöht wird, wobei insbesondere ein erster Verlauf der Sollwerte vorgegeben wird. Hierbei kann insbesondere vorgesehen sein, daß der vorgebbare erste Verlauf der Reduzierung abhängig ist

- von dem Start- und Zielgetriebegang,
- von der Leistungs- beziehungsweise Momentenanforderung des Fahrers,
- von der Fahrzeuggeschwindigkeit,
- vom Fahrertyp,
- von der Fahrsituation und/oder
- vom Betriebszustand der Aggregate, beispielsweise abhängig von der Motor- und/oder Kupplungstemperatur.

Weiterhin kann vorgesehen sein, daß die Sollwerte zur Einstellung einer Motorausgangsdrehzahl oder einer Getriebeeingangsdrehzahl derart vorgegeben werden, daß ein zweiter Verlauf der Sollwerte zur Einstellung einer Motorausgangsdrehzahl oder einer Getriebeeingangsdrehzahl vorgegeben wird.
Die Einstellung der Sollwerte zur Einstellung einer Motorausgangsdrehzahl oder einer Getriebeeingangsdrehzahl kann durch die Einstellung eines indizierten Motormoments geschehen, wobei das aktuell einzustellende indizierte Motormoment

- abhängig von wenigstens einem im ersten Sollverlauf in der Zukunft liegenden Sollwert für die Ausgangsdrehzahl des Motors und/oder
- abhängig von dem vorgegebenen ersten Verlauf der Sollwerte und/oder
- abhängig vom Betriebszustand des Motors, der Kupplung und/oder des Getriebes

ermittelt wird.
Die Einstellung der Sollwerte zur Einstellung einer Motorausgangsdrehzahl oder einer Getriebeeingangsdrehzahl kann weiterhin durch Vorgabe der Sollwerte zur Einstellung eines maximal übertragbaren Kupplungsmoments geschehen, wobei das aktuell einzustellende übertragbare Kupplungsmoment

- abhängig von wenigstens einem im ersten Sollverlauf in der Zukunft liegenden Sollwert für die Ausgangsdrehzahl des Motors und/oder
- abhängig von dem vorgegebenen ersten Verlauf der Sollwerte und/oder
- abhängig vom Betriebszustand des Motors, der Kupplung und/oder des Getriebes

ermittelt wird.
Der Kern der Erfindung ist also die koordinierte Ansteuerung von Motor, Kupplung und Getriebe bei Fahrzeugen mit automatisiertem Schaltgetriebe und elektronischer Motorleistungs- bzw. Motormomentensteuerung zur Steuerung des Schaltablaufes. Ein Bestandteil des Verfahrens ist die Basierung auf dem vom Fahrer gewünschten Antriebsmoment. Insbesondere ist vorgesehen, daß das Antriebsmoment vor und nach der Schaltung identisch ist, sofern der Motor innerhalb seines Leistungsvermögens betrieben wird.
Vom Motor kann während der Schaltung stets das geeignete Moment gefordert werden. Dies ist bei Systemen, bei denen die Ermittlung des Fahrerwunschmomentes durch die Motorsteuerung erfolgt nur bedingt möglich.
Das Wiedereinkuppeln während des Momentenaufbaus kann so gesteuert werden, daß am Ende der Schaltung das Soll-Motorausgangsmoment derart gefordert wird, daß das vom Fahrer gewünschte Antriebsmoment realisiert wird. Die Berücksichtigung des Fahrerwunschmomentes auch während des Schaltablaufes ermöglicht eine optimale Vorgabe vom Motor- und Kupplungsmoment.

Erfindungsgemäß ist es möglich, die Schaltung zeitoptimiert und komfortabel vorzunehmen. Dies erhöht sowohl die Fahrsicherheit als auch den Fahrkomfort.

Eine besonders vorteilhafte Variante der Erfindung besteht in einer prädiktiven Drehzahlregelung, wobei die Drehzahlregelung von Verbrennungskraftmaschinen durch Vorgabe eines indizierten Momentes erzielt wird. Dabei ist ein gewünschter Drehzahlverlauf gegeben, so daß neben der Solldrehzahl zu einem aktuellen Zeitpunkt auch Solldrehzahlen zu zeitlich in der Zukunft liegenden Zeitpunkten bekannt sind. Die gewünschte Drehzahl soll auch bei veränderlichem Lastmoment exakt eingestellt werden. Diese Situation tritt insbesondere während Schaltvorgängen auf, die durch eine koordinierte Motor-/Getriebesteuerung gesteuert werden.

Die prädiktive Drehzahlregelung von Verbrennungskraftmaschinen erlaubt die präzise Realisierung von Drehzahlverläufen bei variablem Lastmoment. Das zum Erreichen eines vorgegebenen Drehzahlverlaufs erforderliche indizierte Moment wird zu diskreten Zeitpunkten errechnet. Kern dieser auf einem Systemmodell des Motors und der Last basierenden Vorgehensweise ist die Berücksichtigung zukünftiger (prädizierter) Solldrehzahlen und Lastmomente zum Zeitpunkt der Berechnung des indizierten Moments. Die prädiktive Drehzahlregelung wird durch den übergeordneten Koordinator, der den Gangwechsel auslöst, aktiviert. Mit Herstellung des Kraftschlusses im Antriebsstrang im Zielgang wird der Algorithmus beendet.

Hierzu ist vorgesehen, daß die erwähnten Sollwerte zur Einstellung einer Motorausgangsdrehzahl oder einer Getriebeeingangsdrehzahl derart vorgegeben werden, daß ein erster Sollverlauf der Sollwerte zur Einstellung einer Motorausgangsdrehzahl oder einer Getriebeeingangsdrehzahl vorgegeben wird.

Insbesondere ist dann vorgesehen, daß die Einstellung der Sollwerte zur Einstellung einer Motorausgangsdrehzahl oder einer Getriebeeingangsdrehzahl durch die Einstellung eines indizierten Motormoments geschieht. Hierbei wird das aktuell einzustellende indizierte Motormoment abhängig von wenigstens einem in dem ersten Sollverlauf in der Zukunft liegenden Sollwert für die Ausgangsdrehzahl des Motors ermittelt.

Weiterhin kann vorgesehen sein, daß Sollwerte zur Einstellung eines maximal übertragbaren Kupplungsmoments derart vorgegeben werden, daß ein zweiter Sollverlauf der Sollwerte zur Einstellung eines maximal übertragbaren Kupplungsmoments vorgegeben wird. Hierbei ist es besonders vorteilhaft, daß das aktuell einzustellende indizierte Motormoment abhängig von wenigstens einem im zweiten Sollverlauf in der Zukunft liegenden Sollwert zur Einstellung eines maximal übertragbaren Kupplungsmoments ermittelt wird.

Weitere vorteilhafte Ausgestaltungen sind den Unteransprüchen zu entnehmen.

## Zeichnung

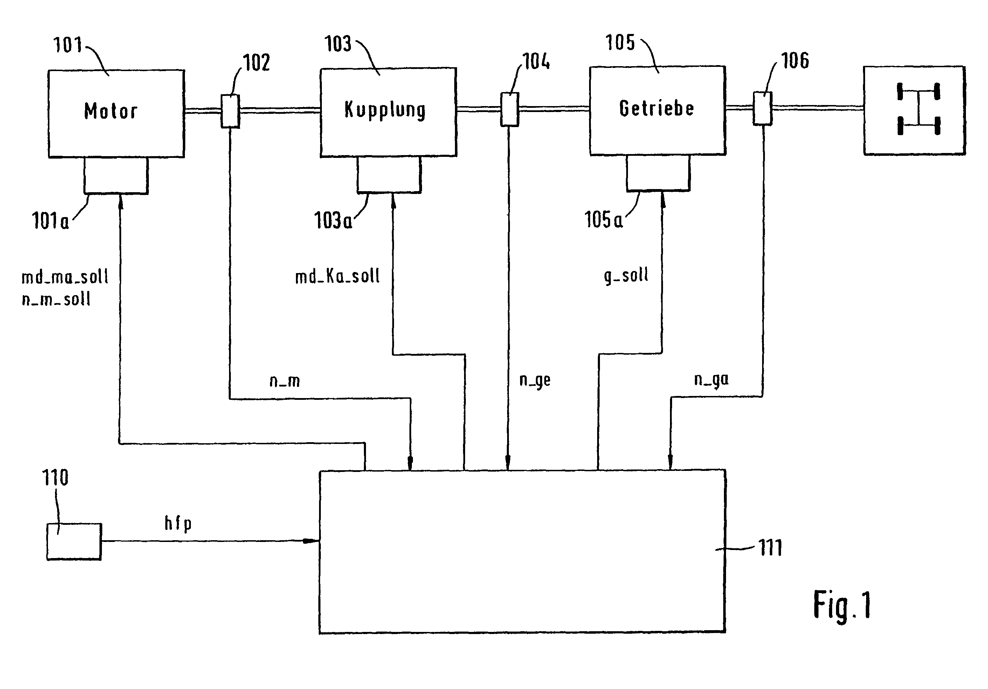

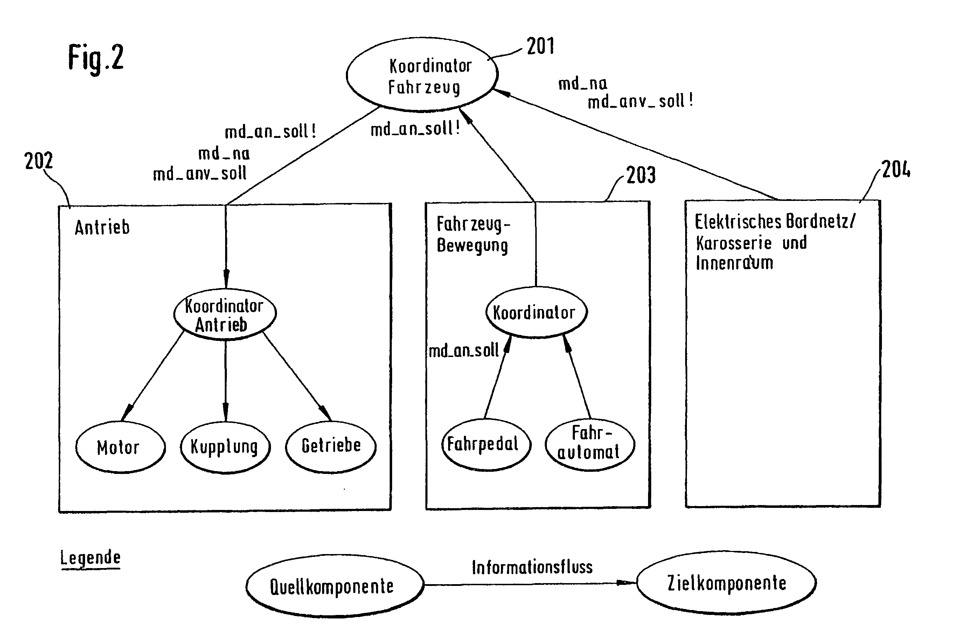

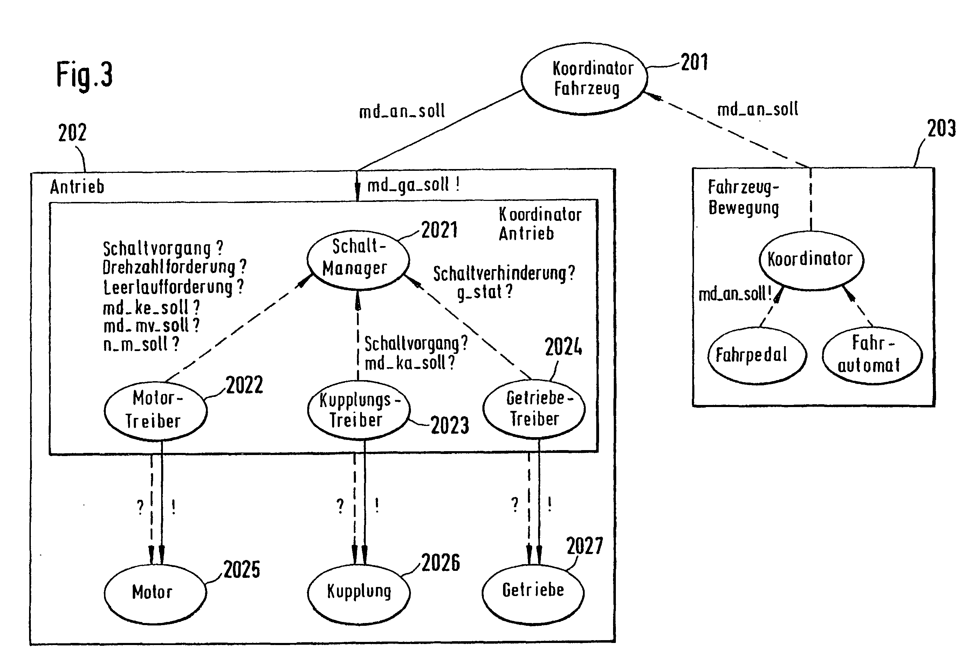

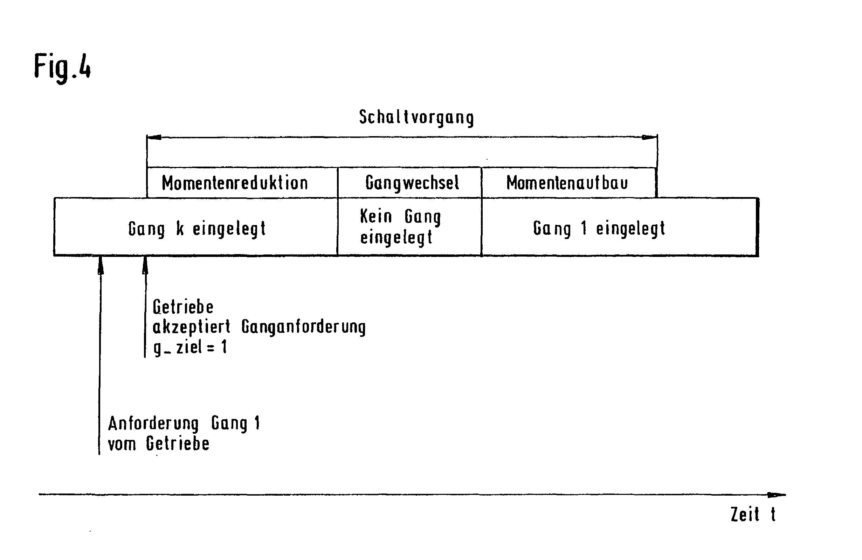

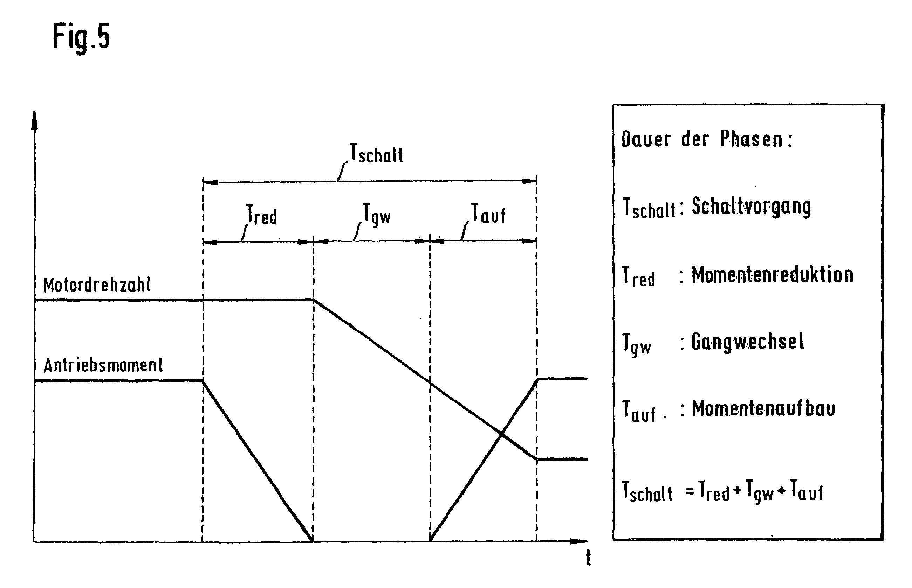

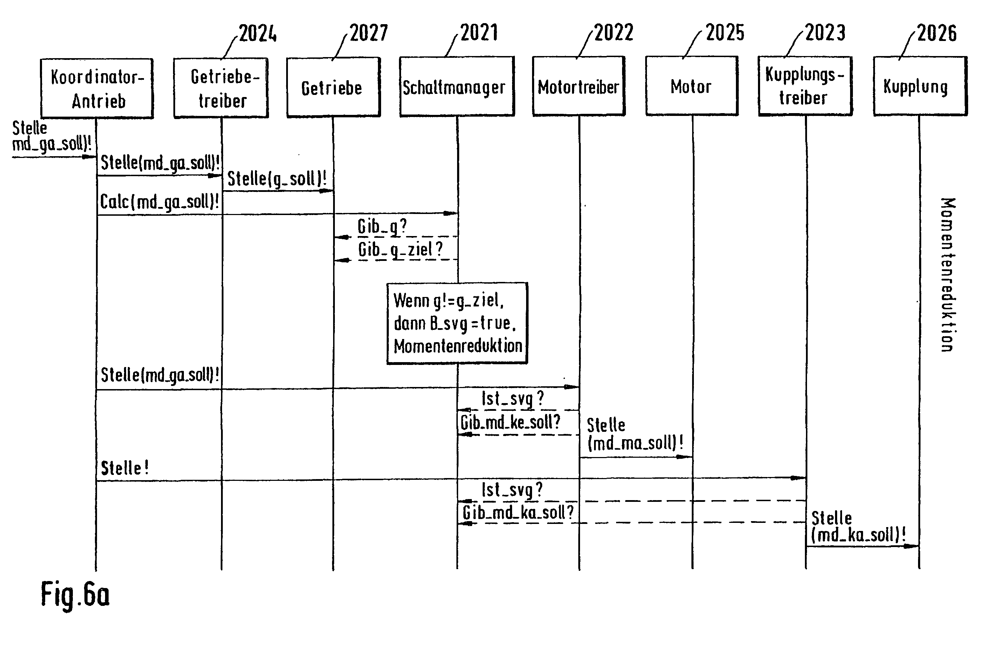

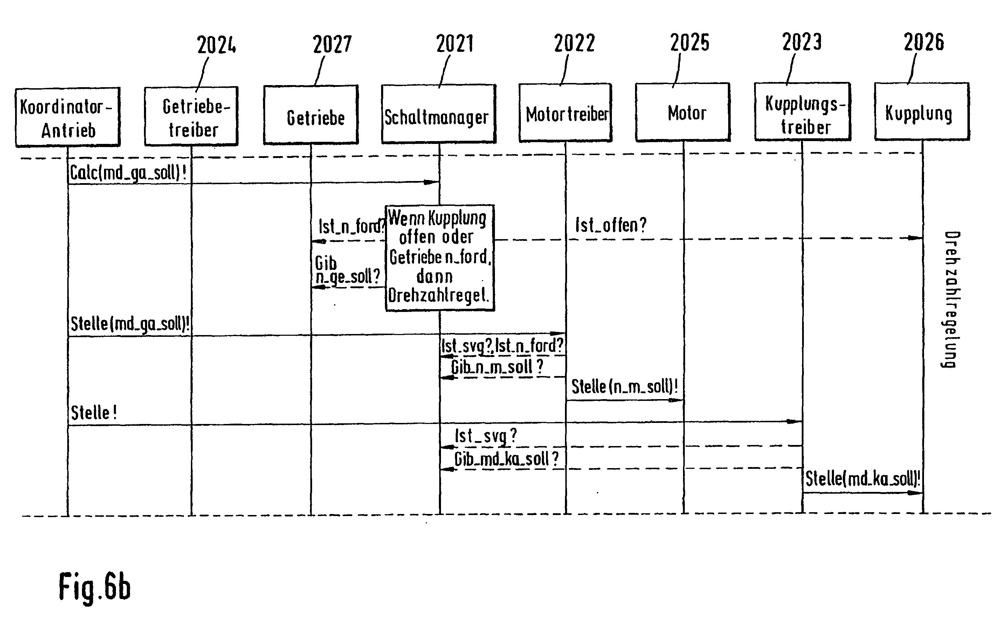

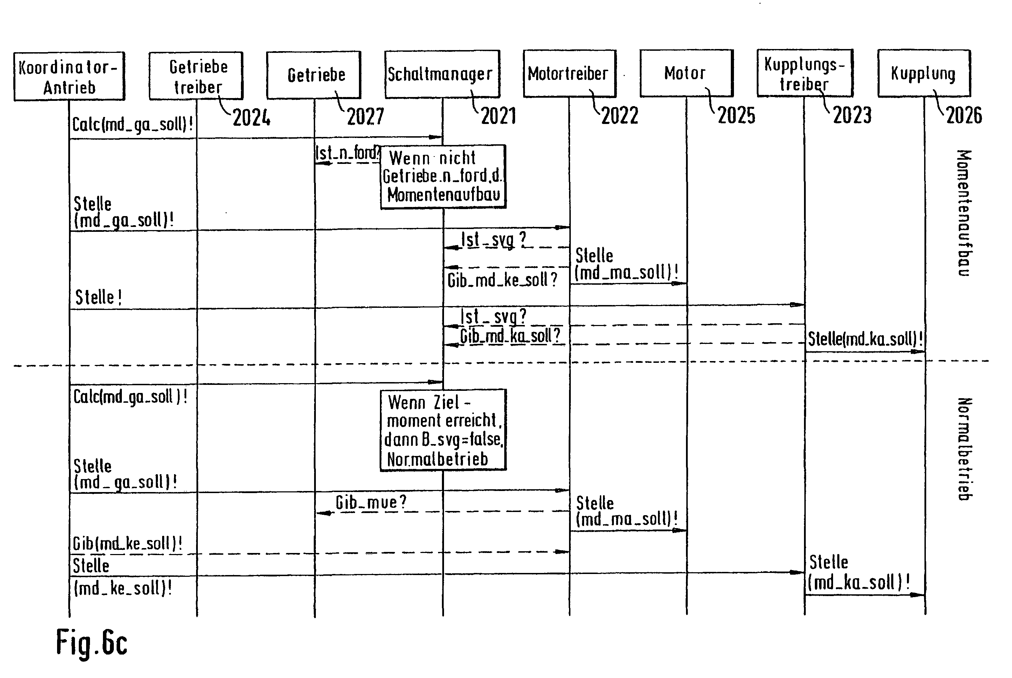

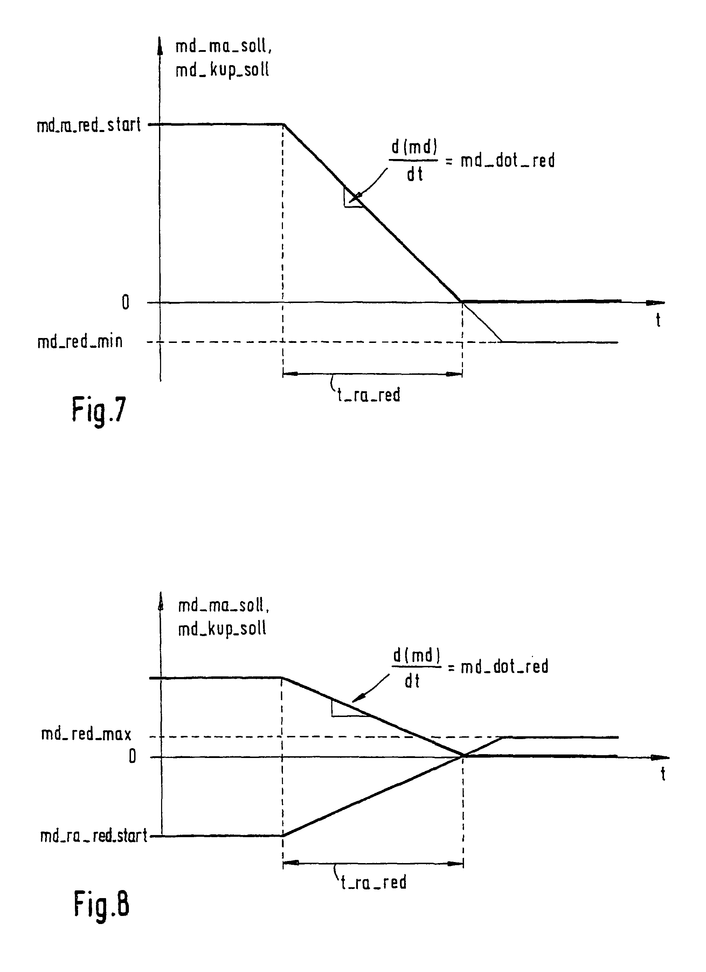

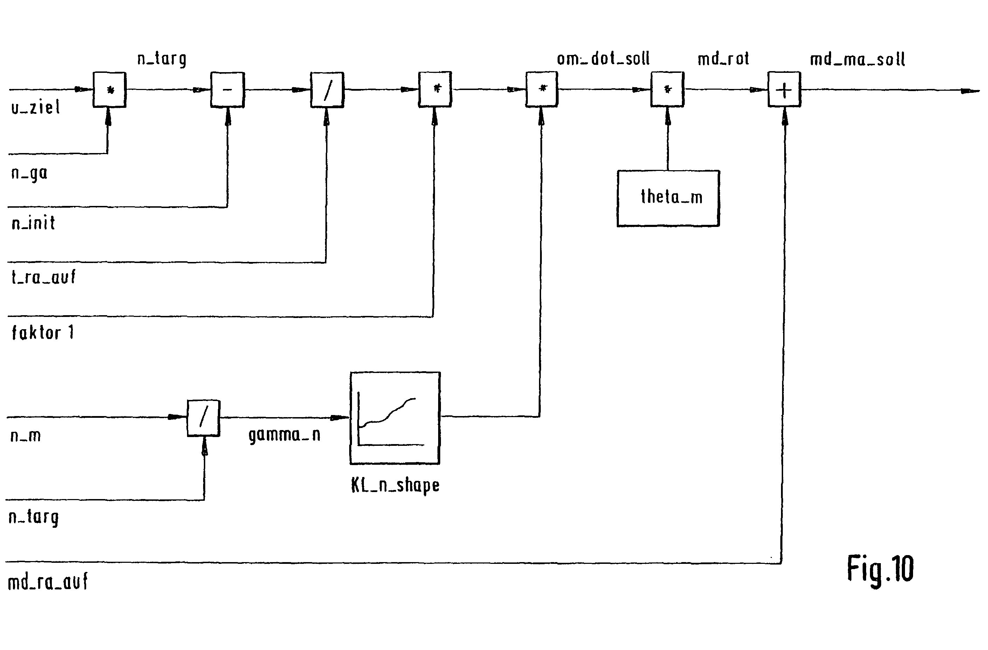

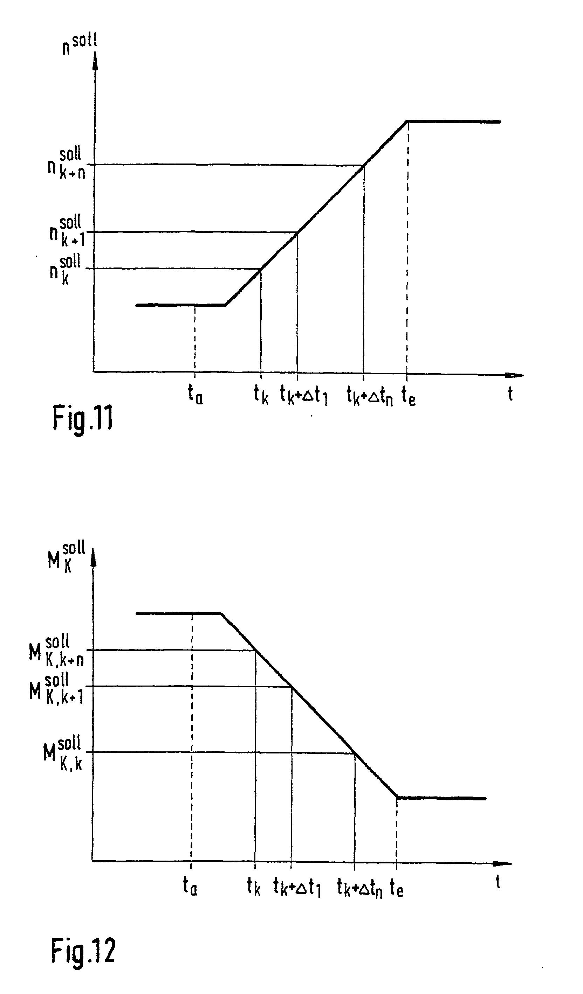

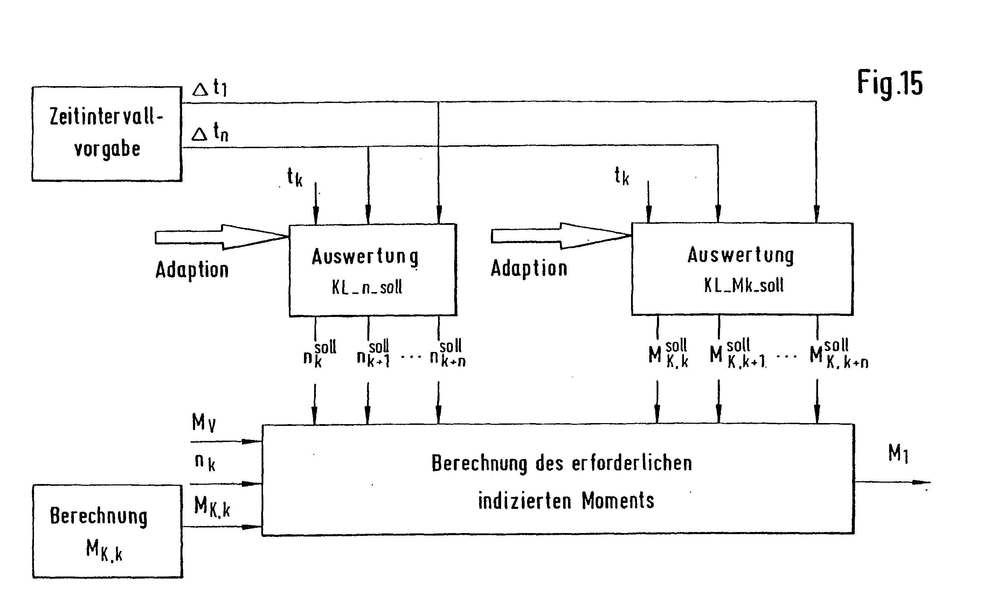

Die Figur 1 zeigt die Erfindung anhand eines Übersichtsblockschaltbildes, während die Figuren 2 und 3 die Einbindung der koordinierten Antriebsstrangsteuerung und des Schaltmanagers in die Gesamtfahrzeugsteuerung aufzeigen. Die Figuren 4 und 5 geben die einzelnen Phasen eines Schaltvorgangs an. Die Figuren 6a, b und c stellen den Datenaustausch zwischen einzelner Elemente der koordinierten Antriebsstrangsteuerung während eines Schaltvorgangs dar. Die Figuren 7, 8 und 9 zeigen den zeitlichen Verlauf einzelner Schaltphasen, während die Figur 10 eine Rechenvorschrift zur Bestimmung des Soll-Motorausgangsmoment in der Phase Momentenaufbau beschreibt. Die Figuren 11 bis 14 offenbaren Drehzahl- und Momentenverläufe zur prädiktiven Drehzahlregelung, während die Figur 15 die prädiktive Drehzahlregelung anhand eines Blockschaltbildes skizziert.

## Ausführungsbeispiel

Die Erfindung wird im folgenden anhand von Ausführungsbeispielen dargestellt.

Durch eine Antriebstrangsteuerung erfolgt der Gangwechsel bei einem Fahrzeug mit einem automatisierten Schaltgetriebe (ASG) und elektronisch betätigter Kupplung durch eine koordinierte Ansteuerung 111 der Komponenten Motor, Kupplung und Getriebe. Die Figur 1 zeigt die Systemarchitektur der Antriebstrangsteuerung.

Das vom Fahrer gewünschte Antriebsmoment wird durch die Antriebstrangsteuerung 111 in Abhängigkeit von der relativen Stellung hfp des Fahrpedals 110 und der Fahrzeuggeschwindigkeit n_ga ermittelt. Von der Motorsteuerung 101a wird ein Motorausgangsmoment md_ma_soll oder die Einstellung einer Motordrehzahl n_m_soll verlangt. Die Kupplungssteuerung 103a wird beauftragt, die Kupplung so einzustellen, daß diese ein Moment md_ka_soll übertragen kann. Alternativ kann auch die Vorgabe einer Soll-Lage oder einer Soll-Kraft des Aktuators, der die automatisierte Kupplung 103 betätigt, vorgesehen sein.

Das Getriebesteuergerät 105a wird vom Koordinator 111 beauftragt, den Soll-Getriebegang g_soll einzustellen.

Durch eine geeignete Sensorik 102, 104 und 106 werden die Motordrehzahl n_m, die Getriebeeingangsdrehzahl n_ge und die Getriebeausgangsdrehzahl n_ga erfaßt und der Antriebstrangsteuerung 111 zur Verfügung gestellt. Außerdem teilen die Steuerungskomponenten 101a, 103a und 105a der Antriebstrangsteuerung 111 weitere Signale mit, die im Zusammenhang mit der Funktionsstruktur der Antriebstrangsteuerung erläutert werden.

Struktur der Koordinierten Antriebsstrangsteuerung:

Anhand der Figur 2 wird die Struktur der koordinierten Antriebsstrangsteuerung 11 und ihre Einbindung in eine Gesamt-Fahrzeugsteuerung beschrieben. Sie erfolgt gemäß einem Ordnungskonzept für Steuerungen, Regelungen, Sensoren und Aktuatoren eines Fahrzeuges. Dargestellt sind Objekte der koordinierten Antriebsstrangsteuerung und der Informationsfluß für ausgewählte Größen.

Der Koordinator Fahrzeug 201 beauftragt den Antrieb 202, ein Antriebsmoment md_an_soll bereitzustellen und dabei eine Leistungs- bzw. Momentenreserve md_anv_soll vorzuhalten, die der Motor innerhalb eines Arbeitstaktes (z.B. über den Zündwinkel) zusätzlich realisieren kann. Er steuert die Leistungs- bzw. Momentenaufnahme md_na der Nebenaggregate, die dem elektrischen Bordnetz sowie Karosserie und Innenraum 204 zugeordnet sind, und teilt sie dem Antrieb mit. Das Soll-Antriebsmoment md_an_soll wird vom Fahrpedal ermittelt. Es ist Teil der Fahrzeugbewegung, in der zusätzlich die Anforderungen eines Fahrautomaten und weiterer Komponenten (nicht dargestellt) koordiniert werden. Die Komponente Fahrzeugbewegung 203 fordert das Soll-Antriebsmoment md_an_soll vom Koordinator Fahrzeug 201 an. Der Antrieb 202 selbst gliedert sich in einen Koordinator Antrieb und die Objekte Motor, Kupplung und Getriebe, die von dem Koordinator angesteuert werden.

Die Steuerung des Schaltvorgangs wird innerhalb der Koordinierten Antriebsstrangsteuerung 202 durch das Objekt Schaltmanager 2021 vorgenommen wird. Das Objekt Schaltmanager 2021 ist ein Teilobjekt des Koordinators Antrieb 202 und koordiniert während einer Schaltung die Treiber 2022, 2023 und 2024 für den Motor 2025, die Kupplung 2026 und das Getriebe 2027. Die Einbindung des Schaltmanagers 2021 in die Antriebsstrangsteuerung 202 und Schnittstellen zwischen dem Schaltmanager 2021 und Motortreiber 2022, Kupplungstreiber 2023 und Getriebetreiber 2027 sind in der Figur 3 dargestellt.

Während des Schaltvorgangs erfolgen durch den Schaltmanager 2021 Momenten- und Drehzahlvorgaben md_ke_soll (Soll-Kupplungsmoment), md_mv_soll (Soll-Momentenvorhalt des Motors) und n_m_soll (Soll-Motordrehzahl) an den Motortreiber 2022. Dieser berücksichtigt diese Vorgaben und erteilt dem Motor bzw. dessen Steuergerät entsprechende Aufträge. Es können dabei wahlweise Momenten- oder Drehzahlforderungen gestellt werden; die Unterscheidung erfolgt durch die logische Variable "Drehzahlforderung".

An den Kupplungstreiber 2023 erfolgt die Vorgabe eines Soll-Kupplungsausgangsmomentes md_ka_soll. Die Kupplung 2026 wird so angesteuert, daß sie in der Lage ist, dieses Moment übertragen zu können. Zur Identifizierung eines Schaltvorgangs wird dem Kupplungstreiber 2023 die Variable "Schaltvorgang" vom Schaltmanager 2021 übermittelt.

Für den Getriebetreiber 2024 kann der Schaltmanager 2021 während einer Schaltung eine Schaltverhinderung veranlassen, so daß bei laufendem Gangwechsel weitere Schaltungen verhindert werden. Der Schaltmanager 2021 verarbeitet Informationen von den Objekten Motor, Kupplung und Getriebe, die er von diesen direkt erfragt. Der Schaltmanager 2021 teilt dem Getriebetreiber 2024 den aktuellen statischen Getriebe-Sollgang g_stat mit.

Durch die koordinierte Antriebsstrangsteuerung werden die Antriebsstrangkomponeten Motor, Kupplung und Getriebe während eines Schaltvorgangs geeignet angesteuert. Ziel der Steuerung ist eine möglichst kurze Dauer des Schaltvorgangs bei gleichzeitig hohem Komfort. Wesentlich wird der Komfort durch die Vermeidung von Rucken und Antriebsstrangschwingungen bestimmt.

Steuerung des Schaltablaufs:

Wie schon erwähnt besteht der Kern der Erfindung in der koordinierten Ansteuerung von Motor, Kupplung und Getriebe während einer Schaltung und während des Normalbetriebs, basierend auf dem vom Fahrer gewünschten Antriebsmoment. Insbesondere wird angestrebt, daß vor und nach einer Schaltung das Antriebsmoment konstant ist ("momentenkonstantes Schalten" ).

In der Figur 4 ist zu sehen, daß sich bei einem Schaltvorgang die drei Phasen Momentenreduktion, Gangwechsel und Momentenaufbau unterscheiden lassen, die sequentiell ablaufen. Ein Schaltvorgang wird durch die Anforderung eines neuen Ganges an das Getriebe durch den Getriebetreiber ausgelöst. Akzeptiert das Getriebe den angeforderten Gang, so wird eine Momentenreduktion eingeleitet. Im Anschluß an die Momentenreduktion erfolgt ein Wechsel des Getriebeganges bei gleichzeitiger Anpassung der Motordrehzahl an die Synchrondrehzahl. Diese Anpassung kann vollständig oder nur teilweise erfolgen. Ist der geforderte Gang eingelegt, so erfolgt ein Momentenaufbau auf den vom Antrieb geforderten Wert für das Antriebsmoment.

Die Dauer der einzelnen Phasen beim Schaltvorgang für eine Hochschaltung ist in der Figur 5 angedeutet. Hier ist schematisch der zeitliche Verlauf der Motordrehzahl und des Antriebsmoments dargestellt. Die Gesamtdauer $T_{schalt}$ des Schaltvorgangs ergibt sich als Summe der Dauern der einzelnen Phasen $T_{red}$ (Momentenreduktion), $T_{gw}$ (Gangwechsel) und $T_{auf}$ (Momentenaufbau). Während des Gangwechsels ist das Antriebsmoment gleich null. Diese Zugkraftunterbrechung ist bei automatisierten Schaltgetrieben prinzipbedingt. Eine Ausnahme hiervon bilden lediglich sogenannte Doppelkupplungsgetriebe. Der Schaltvorgang setzt sich aus 3 Phasen zusammen:

- Phase 1: Momentenreduktion. In dieser Phase wird die Kupplung geöffnet und das Motormoment reduziert.
- Phase 2: Gangwechsel/Drehzahlregelung. In dieser Phase wird der Gang gewechselt. Der Motor wird so angesteuert, daß sich seine Drehzahl der Zieldrehzahl des neuen Ganges anpaßt.
- Phase 3: Momentenaufbau. In dieser Phase wird die Kupplung geschlossen. Das Motormoment wird so gesteuert, daß es nach Ablauf der Schaltung dem Moment entspricht, das im Normalbetrieb zur Bereitstellung des vom Fahrer gewünschten Antriebsmomentes erforderlich ist.

Kommunikationsbeziehungen zur Steuerung des Schaltablaufes:

Die Kommunikationsbeziehungen zwischen den Teilkomponenten der Antriebsstrangsteuerung, insbesondere während der einzelnen Phasen des Schaltablaufes, zeigen die Figuren 6a, b und c. Dargestellt sind die Phasen Momentenreduktion (Figur 6a), Drehzahlregelung (Figur 6b), Momentenaufbau und Normalbetrieb (Figur 6c). Diese Phasen laufen wie schon erwähnt sequentiell ab, so daß in den Figuren 6a, 6b und 6c ein zeitlicher Ablauf wiedergegeben ist.

Momentenreduktion (Fig.6a):

In der Figur 6a (von oben beginnend) ist zu sehen, daß der Koordinator Antrieb 202 mit der Einstellung des Getriebeausgangsmomentes md_ga_soll beauftragt wird. Er teilt diese Größe dem Getriebetreiber 2024 mit, der den Soll-Gang g_soll ermittelt. Der Getriebetreiber 2024 erhält vom Koordinator Antrieb den Auftrag, den Soll-Gang zu bestimmen. Die Einstellung dieses Gangs wird vom Getriebe 2027 gefordert. Der Schaltmanager 2021 wird ebenfalls vom Koordinator Antrieb beauftragt. Er erfragt vom Getriebe 2027 den Ist-Gang (Gib_g) und den Ziel-Gang (Gib_g_ziel?). Weichen diese voneinander ab, wird eine Schaltung eingeleitet (B_svg=true). Motortreiber 2022 und Kupplungstreiber 2023 erfragen vom Schaltmanager 2021, ob ein Schaltvorgang vorliegt (Ist_svg?), und erfragen (Gib_md_ke_soll?, Gib_md_ka_soll?) weiterhin Vorgabewerte für das Soll-Kupplungseingangsmoment md_ke_soll und das Soll-Kupplungsausgangsmoment md_ka_soll und steuern die Komponenten Motor 2025 [Stelle(md_ma_soll)! (Soll-Motorausgangsmoment)] und Kupplung 2026 [Stelle(md_ka_soll)! (Soll-Kupplungsausgangsmoment)] entsprechend an.

Drehzahlregelung (Fig.6b):

Hat das Getriebe 2027 den alten Gang ausgerückt (Abfrage Ist_n_ford?), oder wenn die Kupplung 2026 im wesentlichen geöffnet ist (Abfrage Ist_offen?), so wird dies durch die binären Informationen n_ford oder Ist_offen mitgeteilt, die dadurch wahr wird. Die Getriebesteuerung 2027 errechnet die Synchrondrehzahl des neuen Ganges als Soll-Getriebeeingangsdrehzahl n_ge_soll (Abfrage Gib_n_ge_soll?). Die Motorsteuerung bzw. -treiber wird dann beauftragt, diese Drehzahl einzustellen [Anfrage Gib_n_m_soll? und Stellsignal Stelle(n_m_soll!)]. Eine besonders vorteilhafte Ausgestaltung der Drehzahlregelung, die eingangs erwähnte prädiktive Drehzahlregelung, wird am Ende der Beschreibung genauer beschrieben.

Momentenaufbau (Fig.6c):

Hat das Getriebe 2027 den neuen Gang eingelegt (Abfrage Ist_n_ford?), so wird die binäre Information n_ford falsch. Der Motortreiber 2022 ermittelt aufgrund der Informationen über das gewünschte Getriebeausgangsmoment md_ga_soll (vom Koordinator Antrieb) und das gewünschte Kupplungseingangsmoment md_ke_soll das Soll-Motorausgangsmoment md_ma_soll [(Stelle(md_ma_soll)!]. Der Kupplungstreiber 2023 stellt an der Kupplung 2026 das gewünschte Kupplungsausgangsmoment md_ka_soll [Stelle(md_ka_soll)!] ein

Normalbetrieb (Fig.6c):

Von der Phase Momentenaufbau wird in den Normalbetrieb übergegangen, wenn das Zielmoment erreicht ist. Das Attribut B_svg wird dann auf falsch gesetzt und die Schaltung ist damit abgeschlossen.

Algorithmus zur Momentenreduktion:

Der Algorithmus zur Momentenreduktion ist im wesentlichen im Schaltmanager 2021 realisiert.

Die Momentenreduktion erfolgt ausgehend von einem Moment md_ra_red_start, das dem Soll-Motorausgangsmoment beim Start der Schaltung entspricht. Der prinzipielle Verlauf des Soll-Motorausgangsmomentes md_ma_soll und des Soll-Kupplungsmomentes md_kup_soll ist in der Figur 7 dargestellt. Zunächst wird der Fall des Zugbetriebs beschrieben, bei dem die Größe md_ra_red_start > 0 Nm (Newton-Meter) ist.

Ausgehend vom Moment md_ra_red_start wird das Soll-Motorausgangsmoment md_ma_soll auf einen Wert md_red_min verringert, der applizierbar ist oder geeignet errechnet wird. Das Soll-Kupplungsmoment md_kup_soll wird auf 0 Nm verringert.

Vorteilhaft ist es, die Momentenreduktion rampenförmig vorzunehmen, wobei die Dauer der Reduktion bis auf 0 Nm durch eine Zeit t_ra_red vorgegeben wird. Weiterhin ist es vorteilhaft, diese Zeit bei Beginn der Schaltung zu berechnen. In einer möglichen Ausgestaltung geschieht diese Bestimmung in Abhängigkeit von der Schalt-Art, die durch eine zugehörige Schalt-ID repräsentiert wird. Eine beispielhafte Kodierung zeigt Tabelle:

| Schalt-Art | 1-2 | 2-3 | 3-4 | 4-5 | 5-4 | 4-3 | 3-2 | 2-1 |
|------------|-----|-----|-----|-----|-----|-----|-----|-----|
| Schalt-ID  | 1   | 2   | 3   | 4   | 5   | 6   | 7   | 8   |

Die Dauer t_ra_red kann damit als Ausgangswert einer Kennlinie ermittelt werden, deren Eingangswert die Schalt-ID ist. Sie wird von der Getriebesteuerung geliefert.

Die Berechnung der Soll-Momente erfolgt ausgehend vom Startwert md_ra_red_start durch Dekrementieren entsprechend der Soll-Steigung md_dot_red. Diese Größe wird berechnet zu

$$md\_dot\_red := \frac{d(md)}{dt} = \frac{md\_ra\_red\_start}{t\_ra\_red}.$$

Der Motortreiber 2022 steuert entsprechend den Motor mit dem Soll-Motorausgangsmoment md_ma_soll an. Entsprechend wird das Soll-Kupplungsmoment

$$md\_ka\_soll = md\_kup\_soll$$

bestimmt. Diese Größe wird an den Kupplungstreiber 2023 weitergeleitet, der die Kupplung 2026 entsprechend ansteuert.

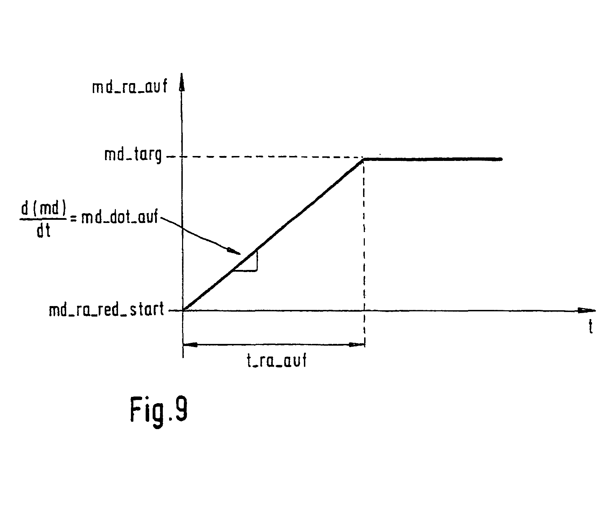

Der Ablauf der Momentenreduktion im Schubbetrieb ist in Figur 8 dargestellt. Hier ist zu bemerken, daß das Soll-Kupplungsmoment immer positiv ist und bei negativem Soll-Motorausgangsmoment dessen Betrag entspricht. Die Reduktion von Motor- und Kupplungsmoment ist also eine Reduktion der Beträge der Momente. Das Soll-Motorausgangsmoment wird ausgehend vom Startwert md_ra_red_start auf einen Wert md_red_max gebracht, der applizierbar ist oder geeignet berechnet wird. Die Dauer und die Steigung der Momentenrampe wird analog zum Zugbetrieb berechnet.

Es ist vorteilhaft, die Dauern t_ra_red durch entsprechende Applikation von der Situation Schub-/Zugbetrieb abhängig zu machen.

Die Phase Momentenreduktion ist abgeschlossen, wenn das Getriebe den Gang ausgerückt hat oder die Kupplung geöffnet ist.

Während der Momentenreduktion werden also die Komponenten des Antriebsstrangs so angesteuert, daß Motor- und Getriebeeingangsdrehzahl weiterhin übereinstimmen. Die Steuerung muß hier insbesondere eine Erhöhung der Motordrehzahl während des Öffnens der Kupplung vermeiden, da diese den Schaltvorgang verlängert und das mit einer Drehzahlanhebung verbundene Motorgeräusch vom Fahrer als unangenehm empfunden wird.

Algorithmus zur Drehzahlregelung:

Während des Gangwechsels wird die Motorsteuerung beauftragt, die Synchrondrehzahl des neuen Ganges einzustellen. Hierzu wird während des Gangwechsels bei der Hochschaltung vom Motor das maximal mögliche Schleppmoment eingestellt, um die Motordrehzahl der Synchrondrehzahl des neuen Ganges anzugleichen. Gleichzeitig bleibt die Kupplung geöffnet, bis der neue Gang eingelegt ist. Damit sind in dieser Phase das Kupplungsausgangsmoment und das Antriebsmoment gleich null.

Daraus resultiert eine Verringerung der Fahrzeuggeschwindigkeit während des Schaltvorgangs.

Bei Rückschaltungen kann vom Schaltmanager 2021 eine aktive Anpassung der Motordrehzahl an die Synchrondrehzahl des neuen Ganges realisiert werden. Durch eine unterlagerte Motordrehzahlregelung, die im Objekt Motor realisiert ist, wird die Motordrehzahl auf den vom Schaltmanager geforderten Wert geregelt. Bei nahezu übereinstimmender Motor- und Getriebeeingangsdrehzahl kann die Kupplung ohne Komforteinbußen schnell geschlossen werden, was zu einer Verkürzung der Schaltvorgangsdauer beiträgt.

Algorithmus zum Momentenaufbau:

Wie die Berechnungsvorschrift zur Momentenreduktion ist auch der Algorithmus zum Momentenaufbau im wesentlichen im Schaltmanager realisiert. Der Momentenaufbau erfolgt ausgehend von einem Moment md_ra_auf_start, das ein applizierbarer Parameter ist oder geeignet berechnet werden kann. Der prinzipielle Verlauf eines Referenzmoments md_ra_auf ist in Figur 9 dargestellt. Die Berechnung des Soll-Motorausgangsmoment md_ma_soll und des Soll-Kupplungsmoments md_ka_soll erfolgt basierend auf dem Referenzmoment md_ra_auf.

Ausgehend vom Moment md_ra_auf_start wird das Referenzmoment auf den Wert des Zielmomentes md_targ erhöht. Das Zielmoment wird laufend entsprechend der Vorschrift

$$md\_targ = \frac{md\_ga\_soll}{mue(g\_ziel)}$$

berechnet. Dabei ist mue(g_ziel) die Momentenverstärkung des Getriebes für den Zielgang. Vorteilhaft ist es, den Momentenaufbau rampenförmig vorzunehmen, wobei die Dauer durch eine Zeit t_ra_auf vorgegeben wird. Weiterhin ist es vorteilhaft, diese Zeit bei Beginn der Phase Momentenaufbau zu berechnen. In einer möglichen Ausgestaltung geschieht diese Bestimmung in Abhängigkeit von der Schalt-Art. Die Dauer t_ra_red kann damit als Ausgangswert einer Kennlinie ermittelt werden, deren Eingangswert die Schalt-ID ist. Sie wird von der Getriebesteuerung geliefert.

Die Berechnung des Referenzmomentes md_ra_auf erfolgt ausgehend vom Startwert md_ra_auf_start durch Inkrementieren entsprechend der Soll-Steigung md_dot_auf. Diese Größe wird berechnet zu

$$md\_dot\_auf := \frac{d(md)}{dt} = \frac{md\_targ\text{-}md\_ra\_auf\_start}{t\_ra\_auf}.$$

Das Soll-Motorausgangsmoment wird ausgehend vom Referenzmoment md_ra_auf berechnet.

Der entsprechende Algorithmus ist in der Figur 10 dargestellt. Zunächst wird die Ziel-Drehzahl n_targ als Produkt der Übersetzung des Ziel-Ganges g_ziel und der Getriebeausgangsdrehzahl n_ga bestimmt.

Die Differenz zwischen n_targ und der Motordrehzahl beim Beginn der Phase Momentenaufbau, n_init, wird durch die Dauer t_ra_auf dividiert und mit einem konstanten Faktor multipliziert. Diese Größe wird mit einer skalaren Größe multipliziert. Das Ergebnis ist der Soll-Gradient der Motordrehzahl om_dot_soll. Die skalare Größe wird aus einer Kennlinie KL_n_shape ausgelesen. Die Eingangsgröße dieser Formkennlinie für den Motordrehzahlverlauf ist das Drehzahlverhältnis zwischen Motordrehzahl und Zieldrehzahl

$$gamma\_n = \frac{n\_m}{n\_targ}.$$

Die Größe om_dot_soll wird mit einer konstanten Größe theta_m multipliziert und das Ergebnis zum Referenzmoment md_ra_auf addiert. Das Ergebnis ist das Soll-Motorausgangsmoment md_ma_soll. Der Motor wird beauftragt, dieses Moment bereitzustellen.

Das Soll-Kupplungsmoment md_ka_soll ist grundsätzlich identisch mit der Größe md_ra_auf, jedoch kann ein Moment P_md_ke_targ_min angegeben werden, das als Soll-Vorgabe für die Kupplung am Ende des Momentenaufbaus mindestens erreicht werden soll.

Es ist vorteilhaft, die Dauern t_ra_auf durch entsprechende Applikation von der Situation Schub-/Zugbetrieb abhängig zu machen.

Das Ende der Phase Momentenaufbau wird erkannt, wenn der Betrag der Differenz zwischen dem Referenzmoment md_ra_auf und dem Zielmoment md_targ eine Schwelle unterschreitet. Diese Schwelle wird vorteilhafterweise bei Beginn der Phase Momentenaufbau in Abhängigkeit von der Größe md_dot auf und der Zyklusdauer der Task, in der die Berechnung erfolgt, berechnet.

Während des Momentenaufbaus wird also durch die schließende Kupplung die Motordrehzahl auf die Synchrondrehzahl des neuen Ganges gebracht. Gleichzeitig erfolgt ein Momentenaufbau, so daß nach Ende des Schaltvorgangs das vom Fahrer gewünschte Antriebsmoment erreicht wird. Um einen vorgegebenen Verlauf des Soll-Antriebsmoments bei gleichzeitiger Drehzahlangleichung zu erreichen werden Motor und Kupplung koordiniert angesteuert. Dabei wird insbesondere berücksichtigt, daß beim Übergang der Kupplung vom Rutschen in ein Haften der Kupplungsscheiben die Differenz der Drehzahlgradienten von Kupplungseingangs- und Ausgangsseite klein sind, so daß Antriebsstrangschwingungen vermieden werden.

Durch den Schaltmanager 2021 werden auch Doppel- und Mehrfachschaltungen behandelt, die z.B. bei Notbremsungen und Überholmanövern erforderlich sind. Wird eine Situation erkannt, in der eine Doppelschaltung erlaubt ist und ist der vom statischen Fahrprogramm bestimmte Soll-Gang kleiner als der vom Getriebe nach dem Gangwechsel eingelegte Gang, so wird bei offener Kupplung vom Getriebe der nächste Gang angefordert. Erst wenn dieser eingelegt wurde, erfolgt ein Momentenaufbau und somit der Abschluß des Schaltvorgangs.

Zusammenfassend ist zu bemerken, daß der Kern der Erfindung in der koordinierten Ansteuerung von Motor, Kupplung und Getriebe bei Fahrzeugen mit automatisiertem Schaltgetriebe und elektronischer Motorleistungs- bzw. -momentensteuerung zur Steuerung des Schaltablaufes besteht. Ein wesentlicher Bestandteil des Verfahrens ist die Basierung auf dem vom Fahrer gewünschten Antriebsmoment. Daraus ergeben sich folgende Vorteile:

- Das Antriebsmoment ist vor und nach der Schaltung identisch, sofern der Motor innerhalb seines Leistungsvermögens betrieben wird.
- Vom Motor kann während der Schaltung stets das geeignete Moment gefordert werden. Dies ist bei Systemen, bei denen die Ermittlung des Fahrerwunschmomentes durch die Motorsteuerung erfolgt nur bedingt möglich.
- Das Wiedereinkuppeln (Phase Momentenaufbau) kann so gesteuert werden, daß am Ende der Schaltung das Soll-Motorausgangsmoment derart gefordert wird, daß das vom Fahrer gewünschte Antriebsmoment realisiert wird. Die Berücksichtigung des Fahrerwunschmomentes auch während des Schaltablaufes ermöglicht eine optimale Vorgabe vom Motor- und Kupplungsmoment.

Damit ist es möglich, die Schaltung zeitoptimiert und komfortabel vorzunehmen. Dies erhöht sowohl die Fahrsicherheit als auch den Fahrkomfort.

Prädiktive Drehzahlregelung:

Wie schon eingangs erwähnt wird bei der prädiktiven Drehzahlregelung die Motordrehzahl durch Vorgabe eines indizierten Momentes erreicht. Dabei ist ein gewünschter Drehzahlverlauf gegeben, so daß neben der Solldrehzahl zu einem aktuellen Zeitpunkt auch Solldrehzahlen zu zeitlich in der Zukunft liegenden Zeitpunkten bekannt sind. Die gewünschte Drehzahl soll auch bei veränderlichem Lastmoment exakt eingestellt werden. Diese Situation tritt insbesondere während Schaltvorgängen auf, die durch eine koordinierte Motor/Getriebesteuerung gesteuert werden.

Das Verfahren zur prädiktiven Drehzahlregelung von Verbrennungskraftmaschinen erlaubt die präzise Realisierung von Drehzahlverläufen bei variablem Lastmoment. Das zum Erreichen eines vorgegebenen Drehzahlverlaufs erforderliche indizierte Moment wird zu diskreten Zeitpunkten errechnet. Kern des auf einem Systemmodell des Motors und der Last basierenden Verfahrens ist die Berücksichtigung zukünftiger (prädizierter) Solldrehzahlen und Lastmomente zum Zeitpunkt der Berechnung des indizierten Moments. Das Verfahren wird durch einen übergeordneten Koordinator, der den Gangwechsel auslöst, aktiviert. Mit Herstellung des Kraftschlusses im Antriebsstrang im Zielgang wird der Algorithmus beendet.

Bei bekannten System ist bei Schaltvorgängen eine Momentenreduktion des Motors durch einen Zündwinkeleingriff durch die Getriebesteuerung oder die Kupplungssteuerung vorgesehen.

In zukünftigen Systemen zur Motorsteuerung, die mit einem elektronischen Drosselklappensteller ausgerüstet sind, erfolgt die Beeinflussung der Motorleistung durch eine Momentenvorgabe. Dadurch ergibt sich die Möglichkeit, auch aktiv Momentenerhöhungen vornehmen zu können. Diese Möglichkeit erlaubt insbesondere, die Schaltzeit bei automatisierten Schaltgetrieben (ASG) zu reduzieren. Dadurch läßt sich die Dauer der Zugkraftunterbrechung verringern und somit Fahrleistung und Komfort erhöhen.

Gegenüber Verfahren zur Momentensteuerung bietet das Verfahren zur prädiktiven Drehzahlregelung den Vorteil größerer Robustheit gegen Störeinflüsse, da die aktuelle Motordrehzahl ständig mit dem Soll-Drehzahlverlauf in Einklang gebracht wird. Mit dem Verfahren kann ein gewünschter Drehzahlverlauf schneller eingestellt werden als mit proportionalen oder proportional-integralen Reglern, da es nicht auf der Existenz einer Regelabweichung beruht.

Das Verfahren zur prädiktiven Drehzahlregelung startet zum Zeitpunkt $t_a$ und endet zum Zeitpunkt $t_e$. Während des Zeitintervalls $[t_a, t_e]$ werden zu diskreten Zeitpunkten $t_k$ Informationen über den Verlauf der Soll-Motordrehzahl $n^{soll}$ und des Soll-Kupplungsmoments $M_K^{soll}$ aus den Kennlinien KL_n_soll (Figur 11) und KL_Mk_soll (Figur 12) ausgelesen.

Das Moment $M_K^{soll}$ ist das von der Schwungscheibe einer Reibkupplung übertragene Moment, wobei diese mit der Kurbelwelle des Motors starr verbunden ist.

Aus den Kennlinien werden neben den Sollwerten für den aktuellen Zeitpunkt $t_k$ auch $n$ weitere, in der Zukunft liegende Sollwerte ermittelt. Für den Sollverlauf der Motordrehzahl ergeben sich die Werte

$$n^{soll}(t_k) \qquad\qquad n_k^{soll}$$

$$n^{soll}(t_k + \Delta t_1) \qquad\qquad n_{k+1}^{soll}$$

$$n^{soll}(t_k + \Delta t_2) \qquad\qquad n_{k+2}^{soll}$$

$$n^{soll}(t_k + \Delta t_n) \qquad\qquad n_{k+n}^{soll}$$

Die Zeitintervalle $\Delta t_1, \Delta t_2, ..., \Delta t_n$ werden durch einen Rechenblock zur Zeitintervallvorgabe zur Verfügung gestellt. Dabei definiert das Intervall $\Delta t_n$ den berücksichtigten Zeithorizont. Das Auslesen der Kennlinie KL_n_soll ist in der Figur 11 dargestellt.

Für den Sollverlauf des Kupplungsmoments ergeben sich analog

$$M_K^{soll}(t_k) \qquad\qquad M_{K.k}^{soll}$$

$$M_K^{soll}(t_k + \Delta t_1) \qquad\qquad M_{K.k+1}^{soll}$$

$$M_K^{soll}(t_k + \Delta t_2) \qquad\qquad M_{K.k+2}^{soll}$$

$$M_K^{soll}(t_k + \Delta t_n) \qquad\qquad M_{K.k+n}^{soll}$$

Das Auslesen der Kennlinie KL_Mk_soll ist in der Figur 12 dargestellt.

Berechnung des erforderlichen indizierten Moments:

Die Berechnung des zur Einstellung des gegebenen Drehzahlverlaufs erforderlichen indizierten Motormoments $M_I$ erfolgt mittels eines Systemmodells des Motors und der Last. In dem Modell ist $\Theta_{eff}$ das effektive Massenträgheitsmoment, das sich aus dem Trägheitsmoment des Motors und der Last additiv zusammensetzt.

Die Größe $M_V(t)$ beschreibt das mechanische Motorverlustmoment, $M_K(t)$ das Kupplungsmoment. Die Winkelgeschwindigkeit der Kurbelwelle ist durch $\omega = 2\pi n$ gegeben.

Eine Betrachtung vom Zeitpunkt $t_k$ bis zum Zeitpunkt $t_{k+1} = t_k + \Delta t_1$ ergibt:

$$\int_{\omega_k}^{\omega_{k+1}} d\omega = \frac{1}{\Theta_{eff}} \int_{t_k}^{t_{k+1}} \left( M_I(t) - M_V(t) - M_K(t) \right) dt \ . \qquad\qquad (1)$$

Im Intervall $[t_k, t_k + \Delta t_1]$ wird das Verlustmoment $M_V$ als konstant angenommen, ebenso das zu bestimmende indizierte Motormoment $M_I$. Damit ergibt sich:

$$\omega_{k+1} - \omega_k = \frac{1}{\Theta_{eff}} \left[ (t_{k+1} - t_k) M_I - (t_{k+1} - t_k) M_V - \int_{t_k}^{t_{k+1}} M_K(t)\,dt \right], \qquad (2)$$

$$M_I = \Theta_{eff} \frac{\omega_{k+1} - \omega_k}{t_{k+1} - t_k} + M_V + \frac{1}{t_{k+1} - t_k} \int_{t_k}^{t_{k+1}} M_K(t)\,dt . \qquad (3)$$

Rechenvorschrift zur prädiktiven Regelung

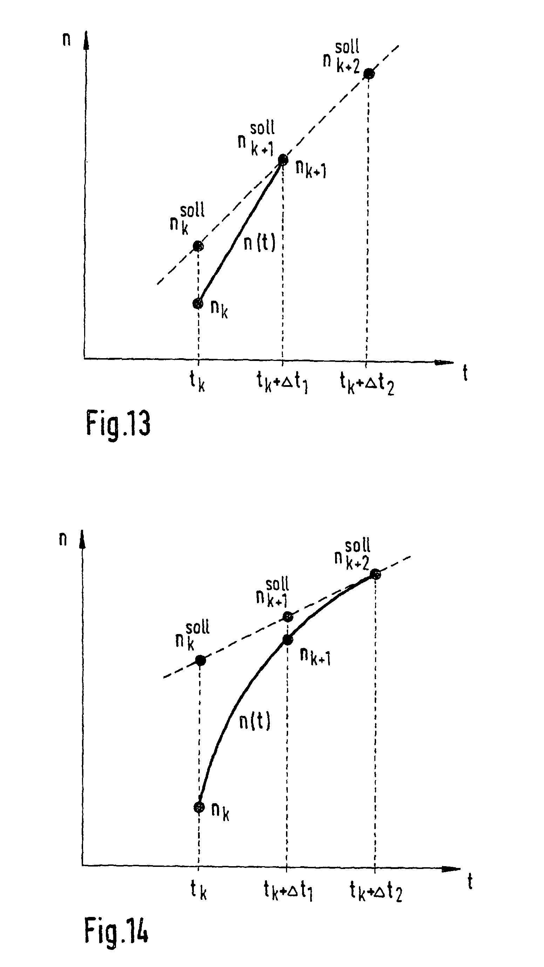

Das indizierte Moment $M_I$ ist Stellgröße für die prädiktive Drehzahlregelung. Zum Zeitpunkt $t_k$ wird das Soll-Moment $M_I$ bestimmt, das erforderlich ist, um zum Zeitpunkt $t_{k+1}$ die Drehzahl $n_{k+1}$ zu erreichen, ausgehend von der aktuellen Drehzahl $n_k$. Die Drehzahl $n_{k+1}$ wird durch ein Interpolationsverfahren aus der aktuellen Drehzahl $n_k$ und den Sollwerten aus der Kennlinie KL_n_soll bestimmt. Dabei wird eine Vorausschau von $n$ Zeitintervallen bis zum Zeithorizont $t_k+\Delta t_n$ vorgenommen. Der Verlauf des Kupplungsmoments $M_K(t)$ wird ausgehend vom aktuellen Kupplungsmoment $M_{K,k}$ in analoger Weise durch ein Interpolationsverfahren mit Hilfe der Kennlinie KL_Mk_soll prädiziert.
Mit einer 1-Schritt-Vorausschau für den Drehzahlverlauf ist $n_{k+1}$ ist mit $n_{k+1}^{soll}$ identisch, wie in der Figur 13 grafisch veranschaulicht.
Für das Kupplungsmoment $M_K(t)$ ergibt sich bei einer 1-Schritt-Vorausschau

$$M_K(t) = M_{K,k} + (t - t_k) \frac{M_{K,k+1} - M_{K,k}}{t_{k+1} - t_k}, \qquad (4)$$

wobei $M_{K,k+1}$ mit $M_{k+1}^{soll}$ identisch ist. Durch Einsetzen von (4) in (3) entsteht mit $\omega_k=2\pi n_k$ und $\omega_{k+1}=2\pi n_{k+1}$ die Rechenvorschrift:

$$M_I = 2\pi \Theta_{eff} \frac{n_{k+1} - n_k}{t_{k+1} - t_k} + M_V + \frac{1}{2} \left( M_{K,k} + M_{K,k+1} \right). \qquad (5)$$

Zur Berechnung von $M_I$ gemäß (5) ist das das aktuelle Kupplungsmoment $M_{K,k}$ geeignet zu bestimmen. Dieses kann beispielsweise meßtechnisch durch einen Drehmomentsensor erfaßt werden. Eine Ersatzwertbildung ist in bekannter Weise durch die Lasterfassung der Motorsteuerung oder durch die Kupplungssteuerung möglich. Eine weitere Möglichkeit ergibt sich durch einen Brennraumdrucksensor in Verbindung mit einem Beobachter (i.S. der Regelungstechnik).
Durch eine weitergehende $n$-schrittige zeitliche Vorausschau kann bei der Ermittlung der Stellgröße zum Zeitpunkt $t_k$ der Verlauf der Soll-Drehzahl und des Soll-Kupplungsmoments bis zum Zeithorizont $t_k+\Delta t_n$ berücksichtigt werden.
Der Drehzahlverlauf $n(t)$ wird durch ein Polynom höchstens n-ten Grades geeignet approximiert, das sich an den durch die Punkte der Kennlinie KL_n_soll gegebenen Soll-Drehzahlverlauf anschmiegt. Das Polynom ist so zu bestimmen, daß die aktuelle Drehzahl $n_k$ auf dem Polynom liegt. Die Drehzahl $n_{k+1}$ ergibt sich als Funktionswert des Polynoms zum Zeitpunkt $t_{k+1}$. Ein mögliches Polynom für eine 2-Schritt-Vorausschau ist in der Figur 14 skizziert.
Für das Kupplungsmoment $M_K(t)$ erfolgt die Bestimmung eines Polynoms in analoger Weise. Der Ausdruck für $M_K(t)$ wird zur Berechnung von $M_I$ in die Bestimmungsgleichung (3) eingesetzt.

Die Berechnung der Zeitintervalle $\Delta t_1, \Delta t_2, ..., \Delta t_n$ erfolgt in einem Rechenblock zur Zeitintervallvorgabe. Die Zeitintervalle können in Abhängigkeit von der Regelgüte vorangegangener Regelvorgänge und dem Betriebspunkt des Motors adaptiert werden.

Ebenso kann eine laufende Adaption der Kennlinien KL_n_soll und KL_Mk_soll, insbesondere in Abhängigkeit vom Fahrerwunsch, erfolgen.

Die oben beschriebene Struktur des Verfahrens der prädiktiven Drehzahlregelung ist in der Figur 15 zusammenfassend skizziert.

**Patentansprüche**

1. System zur koordinierten Steuerung der im Antriebsstrang eines Kraftfahrzeugs angeordneten Elemente Servokupplung (2026), Fahrzeugmotor (2025) und Getriebe (2027) während einer Änderung der Getriebeübersetzung, wobei Koordinationsmittel (2021) vorgesehen sind und jedem der Elemente (2025, 2026, 2027) eine Treiberstufe (2022, 2023, 2024) zugeordnet ist, die mit den Koordinationsmitteln (2021) verbunden ist, und die Koordinationsmittel (2021) während der Änderung der Getriebeübersetzung

   - der dem Fahrzeugmotor zugeordneten Motortreiberstufe (2022) wahlweise

     - Sollwerte (md_ke_soll) zur Einstellung eines Motorausgangsmoments oder eines Kupplungseingangsmoments einerseits oder
     - Sollwerte (n_m_soll) zur Einstellung einer Motorausgangsdrehzahl oder einer Getriebeeingangsdrehzahl andererseits, und

   - der der Kupplung zugeordneten Kupplungstreiberstufe (2023) Sollwerte (md_ka_soll) zur Einstellung eines maximal übertragbaren Kupplungsmoments und
   - der dem Getriebe zugeordneten Getriebetreiberstufe (2024) Sollwerte (g_stat) zur Einstellung einer Getriebeübersetzung vorgeben,

   und die Koordinationsmittel (2021) derart ausgestaltet sind, daß in Reaktion auf eine beabsichtigte Änderung der Getriebeübersetzung der Motortreiberstufe (2022) die Sollwerte (md_ke_soll) zur Einstellung eines Motorausgangsmoments oder eines Kupplungseingangsmoments derart vorgegeben werden, daß das Motorausgangsmoment auf einen vorgegebenen oder vorgebbaren Wert (md_red_min) reduziert wird, **dadurch gekennzeichnet, daß**
   der Kupplungstreiberstufe (2023) Sollwerte (md_ka_soll) zur Einstellung eines maximal übertragbaren Kupplungsmomentes derart vorgegeben werden, dass während einer vorgebbaren Zeitdauer (t_ra_red) gleichzeitig mit der Reduktion des Betrages des Motorausgangsmomentes auf den Wert Null auch das übertragene Kupplungsmoment (md_kup_soll) auf den Wert Null reduziert wird.

2. System nach Anspruch 1, **dadurch gekennzeichnet, daß** im Anschluss an die Reduktion des Motorausgangsmomentes

   - die Koordinationsmittel (2021) der Motortreiberstufe (2022) dann Sollwerte (n_m_soll) zur Einstellung einer Motorausgangsdrehzahl oder einer Getriebeeingangsdrehzahl vorgeben, wenn die Servokupplung (2026) im wesentlichen geöffnet ist und/oder
   - die Änderung der Getriebeübersetzung durch Ausrücken eines Startgetriebegangs und Einrücken eines Zielgetriebegangs stattfindet und die Koordinationsmittel (2021) der Motortreiberstufe (2022) dann Sollwerte (n m soll) zur Einstellung einer Motorausgangsdrehzahl oder einer Getriebeeingangsdrehzahl vorgeben, wenn der Startgetriebegang im Getriebe (2027) ausgerückt ist.

3. System nach Anspruch 1, **dadurch gekennzeichnet, daß** den Koordinationsmitteln (2021) erste Informationen über den Betriebszustand der Servokupplung (2026) und/oder zweite Informationen über den Betriebszustand des Getriebes (2027) und/oder dritte Informationen über den Betriebszustand des Verbrennungsmotors zugeleitet werden und

   - die Koordinationsmittel (2021) der Motortreiberstufe (2022) abhängig von den ersten, zweiten und/oder dritten Informationen

- entweder Sollwerte (md_ke_soll) zur Einstellung eines Motorausgangsmoments oder eines Kupplungseingangsmoments oder
- Sollwerte (n_m_soll) zur Einstellung einer Motorausgangsdrehzahl oder einer Getriebeeingangsdrehzahl

vorgeben und/oder
- die Koordinationsmittel (2021) der Kupplungstreiberstufe (2023) abhängig von den ersten, zweiten und/oder dritten Informationen Sollwerte zur Einstellung eines maximal übertragbaren Kupplungsmomentes vorgeben.

4. System nach Anspruch 1, **dadurch gekennzeichnet, daß** die Änderung der Getriebeübersetzung durch Ausrücken eines Startgetriebegangs und Einrücken eines Zielgetriebegangs stattfindet und

- die Koordinationsmittel (2021) der Motortreiberstufe (2022) dann Sollwerte (md_ke_soll) zur Einstellung eines Motorausgangsmoments oder eines Kupplungseingangsmoments vorgeben, wenn der Zielgetriebegang eingerückt ist und/oder
- die Koordinationsmittel (2021) der Kupplungstreiberstufe (2023) dann Sollwerte (md_ka_soll) zur Einstellung eines maximal übertragbaren Kupplungsmoments vorgeben, wenn der Zielgetriebegang eingerückt ist.

5. System nach Anspruch 1, **dadurch gekennzeichnet, daß** die Reduzierung des Motorausgangsmomentes mittels eines vorgebbaren Verlaufs innerhalb der vorgebbaren Zeitdauer (t_ra_red) geschieht und der Verlauf oder die Zeitdauer abhängig von der Änderung der beabsichtigten Getriebeübersetzung vorgegeben ist,
wobei insbesondere vorgesehen ist, daß der vorgebbare Verlauf der Reduzierung abhängig ist

- von dem Start- und Zielgetriebegang,
- von der Leistungs- beziehungsweise Momentenanforderung des Fahrers,
- von der Fahrzeuggeschwindigkeit,
- vom Fahrertyp,
- von der Fahrsituation und/oder
- vom Betriebszustand der Aggregate, beispielsweise abhängig von der Motor- und/oder Kupplungstemperatur.

6. System nach Anspruch 1, **dadurch gekennzeichnet, daß** die Änderung der Getriebeübersetzung durch Ausrücken eines Startgetriebegangs und Einrücken eines Zielgetriebegangs stattfindet und die Sollwerte (n_m_soll) zur Einstellung einer Motorausgangsdrehzahl oder einer Getriebeeingangsdrehzahl derart vorgegeben werden, daß die Ausgangsdrehzahl (n_m) des Motors (2025) auf die Synchrondrehzahl des Zielgetriebegangs geregelt wird, wozu insbesondere bei Hochschaltvorgängen vorgesehen ist, daß durch den Motortreiber (2022) das maximal mögliche Motorschleppmoment eingestellt wird.

7. System nach Anspruch 1, **dadurch gekennzeichnet, daß** die Änderung der Getriebeübersetzung durch Ausrücken eines Startgetriebegangs und Einrücken eines Zielgetriebegangs stattfindet und die Koordinationsmittel (2021) der Kupplungstreiberstufe (2023) die Sollwerte (md_ka_soll) zur Einstellung eines maximal übertragbaren Kupplungsmoments derart vorgeben, daß das maximal übertragbare Kupplungsmoment auf einen vorgegebenen oder vorgebbaren Wert (md_targ) erhöht wird, wobei insbesondere vorgesehen ist, daß ein erster Verlauf der Sollwerte (KL_MK_soll) vorgegeben wird, wobei insbesondere vorgesehen ist, daß der vorgebbare erste Verlauf der Reduzierung abhängig ist

- von dem Start- und Zielgetriebegang,
- von der Leistungs- beziehungsweise Momentenanforderung des Fahrers,
- von der Fahrzeuggeschwindigkeit,
- vom Fahrertyp,
- von der Fahrsituation und/oder
- vom Betriebszustand der Aggregate, beispielsweise abhängig von der Motor- und/oder Kupplungstemperatur.

8. System nach Anspruch 1, **dadurch gekennzeichnet, daß** die Sollwerte (n_m_soll, n$^{soll}$) zur Einstellung einer Motorausgangsdrehzahl oder einer Getriebeeingangsdrehzahl derart vorgegeben werden, daß ein zweiter Verlauf (KL_n_soll) der Sollwerte (n_m_soll, n$^{soll}$) zur Einstellung einer Motorausgangsdrehzahl oder einer Getriebeeingangsdrehzahl vorgegeben wird.

9. System nach Anspruch 7 und/oder 8, **dadurch gekennzeichnet, daß** die Einstellung der Sollwerte (n_m_soll, n$^{soll}$) zur Einstellung einer Motorausgangsdrehzahl oder einer Getriebeeingangsdrehzahl durch die Einstellung eines indizierten Motormoments (M$_I$) geschieht, wobei das aktuell einzustellende indizierte Motormoment

- abhängig von wenigstens einem im ersten Sollverlauf (KL_n_soll) in der Zukunft liegenden Sollwert für die Ausgangsdrehzahl des Motors und/oder
- abhängig von dem vorgegebenen ersten Verlauf der Sollwerte (KL_MK_soll) und/oder
- abhängig vom Betriebszustand des Motors, der Kupplung und/oder des Getriebes

ermittelt wird.

**10.** System nach Anspruch 7 und/oder 8, **dadurch gekennzeichnet, daß** die Einstellung der Sollwerte (n_m_soll, n$^{soll}$) zur Einstellung einer Motorausgangsdrehzahl oder einer Getriebeeingangsdrehzahl durch Vorgabe der Sollwerte (md_ka_soll) zur Einstellung eines maximal übertragbaren Kupplungsmoments geschieht, wobei das aktuell einzustellende übertragbare Kupplungsmoment

- abhängig von wenigstens einem im ersten Sollverlauf (KL_n_soll) in der Zukunft liegenden Sollwert für die Ausgangsdrehzahl des Motors und/oder
- abhängig von dem vorgegebenen ersten Verlauf der Sollwerte (KL_MK_soll) und/oder
- abhängig vom Betriebszustand des Motors, der Kupplung und/oder des Getriebes

ermittelt wird.

**11.** Verfahren zur koordinierten Steuerung der im Antriebsstrang eines Kraftfahrzeugs angeordneten Elemente Servokupplung (2026), Fahrzeugmotor (2025) und Getriebe (2027) während einer Änderung der Getriebeübersetzung, wobei Koordinationsmittel (2021) vorgesehen sind und jedem der Elemente (2025, 2026, 2027) eine Treiberstufe (2022, 2023, 2024) zugeordnet ist, die mit den Koordinationsmitteln (2021) verbunden ist, und die Koordinationsmittel (2021) während der Änderung der Getriebeübersetzung

- der dem Fahrzeugmotor zugeordneten Motortreiberstufe (2022) wahlweise

  - Sollwerte (md_ke_soll) zur Einstellung eines Motorausgangsmoments oder eines Kupplungseingangsmoments einerseits oder
  - Sollwerte (n_m_soll) zur Einstellung einer Motorausgangsdrehzahl oder einer Getriebeeingangsdrehzahl andererseits, und

- der der Kupplung zugeordneten Kupplungstreiberstufe (2023) Sollwerte (md_ka_soll) zur Einstellung eines maximal übertragbaren Kupplungsmoments und
- der dem Getriebe zugeordneten Getriebetreiberstufe (2024) Sollwerte (g_stat) zur Einstellung einer Getriebeübersetzung

vorgeben, und in Reaktion auf eine beabsichtigte Änderung der Getriebeübersetzung der Motortreiberstufe (2022) die Sollwerte (md_ke_soll) zur Einstellung eines Motorausgangsmoments oder eines Kupplungseingangsmoments derart vorgegeben werden, daß das Motorausgangsmoment auf einen vorgegebenen oder vorgebbaren Wert (md_red_min) reduziert wird,
**dadurch gekennzeichnet, dass** der Kupplungstreiberstufe (2023) Sollwerte (md_ka_soll) zur Einstellung eines maximal übertragbaren Kupplungsmomentes derart vorgegeben werden, dass während einer vorgebbaren Zeitdauer (t_ra_red) gleichzeitig mit der Reduktion des Betrags des Motorausgangsmomentes auf den Wert Null auch das übertragene Kupplungsmoment (md_kup_soll) auf den Wert Null reduziert wird.

**12.** Verfahren nach Anspruch 11, **dadurch gekennzeichnet, daß** im Anschluss an die Reduktion des Motorausgangsmomentes

- die Koordinationsmittel (2021) der Motortreiberstufe (2022) dann Sollwerte (n_m_soll) zur Einstellung einer Motorausgangsdrehzahl oder einer Getriebeeingangsdrehzahl vorgeben, wenn die Servokupplung (2026) im wesentlichen geöffnet ist und/oder
- die Änderung der Getriebeübersetzung durch Ausrücken eines Startgetriebegangs und Einrücken eines Zielgetriebegangs stattfindet und die Koordinationsmittel (2021) der Motortreiberstufe (2022) dann Sollwerte (n_m_soll) zur Einstellung einer Motorausgangsdrehzahl oder einer Getriebeeingangsdrehzahl vorgeben, wenn der Startgetriebegang im Getriebe (2027) ausgerückt ist.

**13.** Verfahren nach Anspruch 11, **dadurch gekennzeichnet, daß** den Koordinationsmitteln (2021) erste Informationen über den Betriebszustand der Servokupplung (2026) und/oder zweite Informationen über den Betriebszustand des Getriebes (2027) zugeleitet werden und die Koordinationsmitteln (2021) der Motortreiberstufe (2022) abhängig von den ersten und/oder zweiten Informationen

- entweder Sollwerte (md_ke_soll) zur Einstellung eines Motorausgangsmoments oder eines Kupplungseingangsmoments oder
- Sollwerte (n_m_soll) zur Einstellung einer Motorausgangsdrehzahl oder einer Getriebeeingangsdrehzahl

vorgeben.

**14.** Verfahren nach Anspruch 11, **dadurch gekennzeichnet, daß** die Sollwerte (n_m_soll, n$^{soll}$) zur Einstellung einer Motorausgangsdrehzahl oder einer Getriebeeingangsdrehzahl derart vorgegeben werden, daß ein Sollverlauf (KL_n_soll) der Sollwerte (n_m_soll, n$^{soll}$) zur Einstellung einer Motorausgangsdrehzahl oder einer Getriebeeingangsdrehzahl vorgegeben wird.

**15.** Verfahren nach Anspruch 11, **dadurch gekennzeichnet, daß** die Änderung der Getriebeübersetzung durch Ausrücken eines Startgetriebegangs und Einrücken eines Zielgetriebegangs stattfindet und die Koordinationsmittel (2021) der Kupplungstreiberstufe (2023) die Sollwerte (md_ka_soll) zur Einstellung eines maximal übertragbaren Kupplungsmoments derart vorgeben, daß das maximal übertragbare Kupplungsmoment auf einen vorgegebenen oder vorgebbaren Wert (md_targ) erhöht wird, wobei insbesondere vorgesehen ist, daß ein erster Verlauf der Sollwerte (KL_MK_soll) vorgegeben wird, wobei insbesondere vorgesehen ist, daß der vorgebbare erste Verlauf der Reduzierung abhängig ist

- von dem Start- und Zielgetriebegang,
- von der Leistungs- beziehungsweise Momentenanforderung des Fahrers,
- von der Fahrzeuggeschwindigkeit,
- vom Fahrertyp,
- von der Fahrsituation und/oder
- vom Betriebszustand der Aggregate, beispielsweise abhängig von der Motor- und/oder Kupplungstemperatur.

**16.** Verfahren nach Anspruch 11, **dadurch gekennzeichnet, daß** die Sollwerte (n_m_soll, n$^{soll}$) zur Einstellung einer Motorausgangsdrehzahl oder einer Getriebeeingangsdrehzahl derart vorgegeben werden, daß ein zweiter Verlauf (KL_n_soll) der Sollwerte (n_m_soll, n$^{soll}$) zur Einstellung einer Motorausgangsdrehzahl oder einer Getriebeeingangsdrehzahl vorgegeben wird.


**Claims**

**1.** System for the coordinated control of the elements arranged in the drive train of a motor vehicle, the servo clutch (2026), the vehicle engine (2025) and the transmission (2027), during changing of the transmission ratio, coordination means (2021) being provided and each of the elements (2025, 2026, 2027) being assigned a driver stage (2022, 2023, 2024), which is connected to the coordination means (2021), and, during the changing of the transmission ratio, the coordination means (2021) prescribing

- to the engine driver stage (2022) assigned to the vehicle engine optionally

  - setpoint values (md_ke_set) for setting an engine output torque or a clutch input torque on the one hand or
  - setpoint values (n_m_set) for setting an engine output speed or a transmission input speed on the other hand, and

- to the clutch driver stage (2023) assigned to the clutch setpoint values (md_ka_set) for setting a maximum transferable clutch torque and
- to the transmission driver stage (2024) assigned to the transmission setpoint values (g_stat) for setting a transmission ratio,

and the coordination means (2021) being designed in such a way that, in response to intended changing of the transmission ratio, the setpoint values (md_ke_set) for setting an engine output torque or a clutch input torque are prescribed to the engine driver stage (2022) in such a way that the engine output torque is reduced to a prescribed or prescribable value (md_red_min),

**characterized in that**

setpoint values (md_ka_set) for setting a maximum transferable clutch torque are prescribed to the clutch driver stage (2023) in such a way that, during a prescribable time period (t_ra_red), at the same time as the reduction of the amount of the engine output torque to the value zero, the transferred clutch torque (md_kup_set) is also reduced to the value zero.

2. System according to Claim 1, **characterized in that**, following the reduction of the engine output torque,

- the coordination means (2021) prescribe setpoint values (n_m_set) for setting an engine output speed or a transmission input speed to the engine driver stage (2022) when the servo clutch (2026) is substantially open and/or
- the changing of the transmission ratio takes place by disengaging a starting gear and engaging a target gear and the coordination means (2021) prescribe setpoint values (n_m_set) for setting an engine output speed or a transmission input speed to the engine driver stage (2022) when the starting gear in the transmission (2027) is disengaged.

3. System according to Claim 1, **characterized in that** the coordination means (2021) are supplied with first items of information concerning the operating state of the servo clutch (2026) and/or second items of information concerning the operating state of the transmission (2027) and/or third items of information concerning the operating state of the internal combustion engine and

- dependent on the first, second and/or third items of information, the coordination means (2021) prescribe to the engine driver stage (2022)
- either setpoint values (md_ke_set) for setting an engine output torque or a clutch input torque or
- setpoint values (n_m_set) for setting an engine output speed or a transmission input speed

and/or

- dependent on the first, second and/or third items of information, the coordination means (2021) prescribe to the clutch driver stage (2023) setpoint values for setting a maximum transferable clutch torque.

4. System according to Claim 1, **characterized in that** the changing of the transmission ratio takes place by disengaging a starting gear and engaging a target gear and

- the coordination means (2021) then prescribe setpoint values (md_ke_set) for setting an engine output torque or a clutch input torque to the engine driver stage (2022) when the target gear is engaged and/or
- the coordination means (2021) then prescribe setpoint values (md_ka_set) for setting a maximum transferable clutch torque to the clutch driver stage (2023) when the target gear is engaged.

5. System according to Claim 1, **characterized in that** the reduction of the engine output torque takes place by means of a prescribable variation within the prescribable time period (t_ra_red), and the variation of the time period is prescribed according to the changing of the intended transmission ratio, it being provided in particular that the prescribable variation of the reduction is dependent

- on the starting gear and target gear,
- on the power or torque requirement of the driver,
- on the vehicle speed,
- on the type of driver,
- on the driving situation and/or
- on the operating state of the units, for example dependent on the temperature of the engine and/or clutch.

6. System according to Claim 1, **characterized in that** the changing of the transmission ratio takes place by disengaging a starting gear and engaging a target gear, and the setpoint values (n_m_set) for setting an engine output speed or a transmission input speed are prescribed in such a way that the output speed (n_m) of the engine (2025) is controlled to the synchronous speed of the target gear, for which purpose it is provided, in particular in the case of shifting-up operations, that the maximum possible engine drag torque is set by the engine driver (2022).

7.  System according to Claim 1, **characterized in that** the changing of the transmission ratio takes place by disengaging a starting gear and engaging a target gear, and the coordination means (2021) prescribe the setpoint values (md_ka_set) for setting a maximum transferable clutch torque to the clutch driver stage (2023) in such a way that the maximum transferable clutch torque is increased to a prescribed or prescribable value (md_targ), it being provided in particular that a first variation of the setpoint values (KL_MK_set) is prescribed, it being provided in particular that the prescribable first variation of the reduction is dependent

    -   on the starting gear and target gear,
    -   on the power or torque requirement of the driver,
    -   on the vehicle speed,
    -   on the type of driver,
    -   on the driving situation and/or
    -   on the operating state of the units, for example dependent on the temperature of the engine and/or clutch.

8.  System according to Claim 1, **characterized in that** the setpoint values (n_m_set, n$^{set}$) for setting an engine output speed or a transmission input speed are prescribed in such a way that a second variation (KL_n_set) of the setpoint values (n_m_set, n$^{set}$) is prescribed for setting an engine output speed or a transmission input speed.

9.  System according to Claim 7 and/or 8, **characterized in that** the setting of the setpoint values (n_m_set, n$^{set}$) for setting an engine output speed or a transmission input speed takes place by the setting of an indexed engine torque (M$_I$), the indexed engine torque that is to be set at a given time being determined

    -   according to at least one setpoint value in the first setpoint variation (KL_n_set) lying in the future for the output speed of the engine and/or
    -   according to the prescribed first variation of the setpoint values (KL_MK_set) and/or
    -   according to the operating state of the engine, the clutch and/or the transmission.

10. System according to Claim 7 and/or 8, **characterized in that** the setting of the setpoint values (n_m_set, n$^{set}$) for setting an engine output speed or a transmission input speed takes place by prescribing the setpoint values (md_ka_set) for setting a maximum transferable clutch torque, the transferable clutch torque that is to be set at a given time being determined

    -   according to at least one setpoint value in the first setpoint variation (KL_n_set) lying in the future for the output speed of the engine and/or
    -   according to the prescribed first variation of the setpoint values (KL_MK_set) and/or
    -   according to the operating state of the engine, the clutch and/or the transmission.

11. Method for the coordinated control of the elements arranged in the drive train of a motor vehicle, the servo clutch (2026), the vehicle engine (2025) and the transmission (2027), during changing of the transmission ratio, coordination means (2021) being provided and each of the elements (2025, 2026, 2027) being assigned a driver stage (2022, 2023, 2024), which is connected to the coordination means (2021), and, during the changing of the transmission ratio, the coordination means (2021) prescribing

    -   to the engine driver stage (2022) assigned to the vehicle engine optionally

        -   setpoint values (md_ke_set) for setting an engine output torque or a clutch input torque on the one hand or
        -   setpoint values (n_m_set) for setting an engine output speed or a transmission input speed on the other hand, and

    -   to the clutch driver stage (2023) assigned to the clutch setpoint values (md_ka_set) for setting a maximum transferable clutch torque and
    -   to the transmission driver stage (2024) assigned to the transmission setpoint values (g_stat) for setting a transmission ratio,

    and, in response to intended changing of the transmission ratio, the setpoint values (md_ke_set) for setting an engine output torque or a clutch input torque being prescribed to the engine driver stage (2022) in such a way that the engine output torque is reduced to a prescribed or prescribable value (md_red_min), **characterized in that** setpoint values (md_ka_set) for setting a maximum transferable clutch torque are prescribed to the clutch driver stage (2023) in such a way that, during a prescribable time period (t_ra_red), at the same time as the reduction of the amount of the engine output torque to the value zero, the transferred clutch torque (md_kup_set) is also reduced to the value zero.

**12.** Method according to Claim 11, **characterized in that**, following the reduction of the engine output torque,

- the coordination means (2021) prescribe setpoint values (n_m_set) for setting an engine output speed or a transmission input speed to the engine driver stage (2022) when the servo clutch (2026) is substantially open and/or
- the changing of the transmission ratio takes place by disengaging a starting gear and engaging a target gear and the coordination means (2021) prescribe setpoint values (n_m_set) for setting an engine output speed or a transmission input speed to the engine driver stage (2022) when the starting gear in the transmission (2027) is disengaged.

**13.** Method according to Claim 11, **characterized in that** the coordination means (2021) are supplied with first items of information concerning the operating state of the servo clutch (2026) and/or second items of information concerning the operating state of the transmission (2027) and, dependent on the first and/or second items of information, the coordination means (2021) prescribe to the engine driver stage (2022)

- either setpoint values (md_ke_set) for setting an engine output torque or a clutch input torque or
- setpoint values (n_m_set) for setting an engine output speed or a transmission input speed.

**14.** Method according to Claim 11, **characterized in that** the setpoint values (n_m_set, n$^{set}$) for setting an engine output speed or a transmission input speed are prescribed in such a way that a setpoint variation (KL_n_set) of the setpoint values (n_m_set, n$^{set}$) is prescribed for setting an engine output speed or a transmission input speed.

**15.** Method according to Claim 11, **characterized in that** the changing of the transmission ratio takes place by disengaging a starting gear and engaging a target gear, and the coordination means (2021) prescribe the setpoint values (md_ka_set) for setting a maximum transferable clutch torque to the clutch driver stage (2023) in such a way that the maximum transferable clutch torque is increased to a prescribed or prescribable value (md_targ), it being provided in particular that a first variation of the setpoint values (KL_MK_set) is prescribed, it being provided in particular that the prescribable first variation of the reduction is dependent

- on the starting gear and target gear,
- on the power or torque requirement of the driver,
- on the vehicle speed,
- on the type of driver,
- on the driving situation and/or
- on the operating state of the units, for example dependent on the temperature of the engine and/or clutch.

**16.** Method according to Claim 11, **characterized in that** the setpoint values (n_m_set, n$^{set}$) for setting an engine output speed or a transmission input speed are prescribed in such a way that a second variation (KL_n_set) of the setpoint values (n_m_set, n$^{set}$) is prescribed for setting an engine output speed or a transmission input speed.

**Revendications**

**1.** Système pour la commande coordonnée des éléments disposés dans la transmission d'un véhicule automobile : embrayage assisté (2026), moteur d'automobile (2025) et boîte de vitesses (2027) pendant un changement du rapport de boîte, dans lequel des instruments de coordination (2021) sont prévus, un étage excitateur (2022, 2023, 2024) relié aux instruments de coordination (2021) est associé à chacun des éléments (2025, 2026, 2027) et les instruments de coordination définissent pendant le changement du rapport de boîte :

• pour l'étage excitateur (2022) du moteur associé au moteur automobile au choix :

soit des valeurs de consigne (md_ke_soll) pour régler un couple de sortie du moteur ou un couple d'entrée de l'embrayage,
soit des valeurs de consigne (n_m_soll) pour régler une vitesse de rotation de sortie du moteur ou d'entrée de la boîte de vitesses, et

- pour l'étage excitateur (2023) de l'embrayage associé à l'embrayage des valeurs de consigne (md_ka_soll) pour régler un couple d'embrayage transmissible maximum, et
- pour l'étage excitateur (2024) de la boîte de vitesses associé à la boîte de vitesses des valeurs de consigne (g_stat) pour régler un rapport de boîte,

et les instruments de coordination (2021) sont configurés de manière à ce que les valeurs de consigne (md_ke_soll) pour régler un couple de sortie du moteur ou d'entrée de l'embrayage réagissent à une modification volontaire du rapport de boîte de l'étage excitateur du moteur (2022) de façon à ce que le couple de sortie du moteur soit réduit à une valeur définie ou définissable (md_red_min),
**caractérisé en ce que**
des valeurs de consigne (md_ka_soll) pour régler un couple d'embrayage transmissible maximum sont définies pour l'étage excitateur d'embrayage (2023) de sorte que le couple d'embrayage transmis (md_kup_soll) soit réduit à la valeur zéro pendant une durée définissable (t_ra_red) en même temps que la valeur du couple de sortie du moteur est réduite à zéro.

2. Système selon la revendication 1,
**caractérisé en ce qu'**
à la suite de la réduction du couple de sortie du moteur

- les instruments de coordination (2021) de l'étage excitateur du moteur (2022) définissent des valeurs de consigne (n_m_soll) pour régler une vitesse de rotation de sortie du moteur ou d'entrée de la boîte de vitesses lorsque l'embrayage assisté (2026) est essentiellement ouvert, et/ou
- la modification du rapport de boîte se produit en débrayant un rapport initial et en embrayant un rapport cible et les instruments de coordination (2021) de l'étage excitateur (2022) définissent ensuite des valeurs de consigne (n_m_soll) pour régler une vitesse de rotation de sortie du moteur ou d'entrée de la boîte de vitesses lorsque le rapport initial est débrayé dans la boîte de vitesses (2027).

3. Système selon la revendication 1,
**caractérisé en ce que**
de premières informations relatives à l'état de fonctionnement de l'embrayage assisté (2026) et/ ou de deuxièmes informations sur l'état de fonctionnement de la boîte de vitesses (2027) et/ou de troisièmes informations sur l'état de fonctionnement du moteur à combustion interne sont envoyées aux instruments de coordination (2021),
les instruments de coordination (2021) de l'étage excitateur du moteur (2022) définissent, en fonction des premières, deuxièmes et/ou troisièmes informations :

- soit des valeurs de consigne (md_ke_soll) pour régler un couple de sortie du moteur ou un couple d'entrée de l'embrayage
- soit des valeurs de consigne (n_m_soll) pour régler une vitesse de rotation de sortie du moteur ou d'entrée de la boîte de vitesses,

et/ou
les instruments de coordination (2021) de l'étage excitateur de l'embrayage (2023) définissent des valeurs de consigne pour régler un couple d'embrayage transmissible maximum en fonction des premières, deuxièmes et/ ou troisièmes informations.

4. Système selon la revendication 1,
**caractérisé en ce que**
la modification du rapport de boîte se produit en débrayant un rapport initial et en embrayant un rapport cible et les instruments de coordination (2021) de l'étage excitateur de moteur (2022) définissent ensuite des valeurs de consigne (md_ke_soll) pour régler un couple de sortie du moteur ou un couple d'entrée de l'embrayage lorsque le rapport cible est embrayé et/ou que les instruments de coordination (2021) de l'étage excitateur de l'embrayage (2023) définissent ensuite des valeurs de consigne (md_ka_soll) pour régler un couple d'embrayage transmissible maximum lorsque le rapport cible est embrayé.

5. Système selon la revendication 1,

**caractérisé en ce que**

la réduction du couple de sortie du moteur se produit dans la durée définissable (t_ra_red) à l'aide d'une variation dans le temps définissable et cette variation dans le temps ou la durée est définie en fonction de la modification du rapport de boîte visée,

dans lequel il est notamment prévu que la variation dans le temps de la réduction dépend :

des rapports initial et cible,
de l'exigence de puissance et/ou de couple du conducteur,
de la vitesse du véhicule,
du type de véhicule,
de la situation de conduite et/ou
de l'état de fonctionnement de l'ensemble, et/ou par exemple en fonction de la température du moteur et/ ou de l'embrayage.

6. Système selon la revendication 1,
**caractérisé en ce que**
la modification du rapport de boîte se produit en débrayant un rapport initial et en embrayant un rapport cible, et les valeurs théoriques (n_m_soll) pour régler une vitesse de rotation de sortie du moteur ou d'entrée de la boîte de vitesses sont définies de manière à ce que la vitesse de rotation de sortie (n_m) du moteur (2025) soit réglée sur la vitesse de rotation de synchronisation du rapport cible, sachant qu'il est prévu, notamment en cas de changement de vitesses en haut, que l'excitateur moteur (2022) puisse régler le couple moteur maximum possible de patinage.

7. Système selon la revendication 1,
**caractérisé en ce que**
la modification du rapport de boîte se produit en débrayant un rapport initial et en embrayant un rapport cible, et les instruments de coordination (2021) de l'étage excitateur (2023) de l'embrayage définissent les valeurs de consigne (md_ke_soll) pour régler un couple d'embrayage transmissible maximum de sorte que le couple d'embrayage maximum transmissible augmente à une valeur définie ou définissable (md_targ), dans lequel il est notamment prévu qu'une première courbe de consigne (KD_MK_soll) soit définie en prévoyant notamment que la première courbe définissable de la réduction dépend :

- des rapports initial et cible,
- de l'exigence de puissance et/ou de couple du conducteur,
- de la vitesse du véhicule,
- du type de véhicule,
- de la situation de conduite et/ ou
- de l'état de fonctionnement de l'ensemble, par exemple en fonction de la température du moteur et/ou de l'embrayage.

8. Système selon la revendication 1,
**caractérisé en ce que** 1
les valeurs de consigne (n_m_soll, $n^{soll}$) pour régler une vitesse de rotation de sortie du moteur ou d'entrée de l'embrayage sont définies de sorte qu'une deuxième courbe (KD_n_soll) des valeurs de consigne (n_m_soll, $n^{soll}$) est définie pour régler une vitesse de rotation de sortie du moteur ou d'entrée de la boîte de vitesses.

9. Système selon la revendication 7 et/ou 8,
**caractérisé en ce que**
le réglage d'un couple moteur indicé ($M_I$) permet de régler les valeurs théoriques (n_m_soll, $n^{soll}$) pour régler une vitesse de rotation de sortie du moteur ou d'entrée de la boîte de vitesses, dans lequel le couple moteur indicé à régler actuellement est calculé en fonction :

- d'au moins une valeur de consigne à venir dans la première courbe de consigne (KL_n_soll) pour la vitesse de rotation de sortie du moteur et/ ou
- de la première courbe définie des valeurs de consigne (KL_MK_soll) et/ou
- de l'état de fonctionnement du moteur, de l'embrayage et/ou de la boîte de vitesses.

10. Système selon la revendication 7 et/ou 8,

**caractérisé en ce que**
la définition des valeurs de consigne (md_ka_soll) pour régler un couple d'embrayage maximum transmissible permet de régler les valeurs de consigne (n_m_soll, n$^{soll}$) pour régler une vitesse de rotation de sortie du moteur ou d'entrée de la boîte de vitesses, dans lequel le couple d'embrayage transmissible à régler actuellement est calculé en fonction :

- d'au moins une valeur de consigne à venir dans la première courbe de consigne dans le temps (KL_n_soll) pour la vitesse de rotation de sortie du moteur, et/ou
- de la première courbe définie des valeurs de consigne (KL_MK_soll), et/ou

de l'état de fonctionnement du moteur, de l'embrayage et/ou de la boîte de vitesses.

11. Procédé pour la commande coordonnée des éléments disposés dans la transmission d'un véhicule automobile : embrayage assisté (2026), moteur d'automobile (2025) et boîte de vitesses (2027) pendant un changement du rapport de boîte, dans lequel des instruments de coordination (2021) sont prévus, un étage excitateur (2022, 2023, 2024) relié aux instruments de coordination (2021) est associé à chacun des éléments (2025, 2026, 2027), les instruments de coordination (2021) définissent pendant le changement du rapport de boîte :

- pour l'étage excitateur (2022) du moteur associé au moteur automobile

  - soit des valeurs de consigne (md_ke_soll) pour régler un couple de sortie du moteur ou un couple d'entrée de l'embrayage,
  - soit des valeurs de consigne (n_m_soll) pour régler une vitesse de rotation de sortie du moteur ou d'entrée de la boîte de vitesses, et

- pour l'étage excitateur (2023) de l'embrayage associé à l'embrayage des valeurs de consigne (md_ka_soll) pour régler un couple d'embrayage transmissible maximum et
- pour l'étage excitateur (2024) de la boîte de vitesses associé à la boîte de vitesses des valeurs de consigne (g_stat) pour régler un rapport de boîte

et
les valeurs de consigne (md_ke_soll) pour régler un couple de sortie du moteur ou un couple d'entrée de l'embrayage sont définies en réaction à une modification volontaire du rapport de boîte de l'étage excitateur du moteur (2022) de manière à ce que le couple de sortie du moteur soit réduit à une valeur définie ou définissable (md_red_min),
**caractérisé en ce que**
des valeurs de consigne (md_ka_soll) pour régler un couple d'embrayage transmissible maximum sont définies pour l'étage excitateur d'embrayage (2023) de sorte que le couple d'embrayage transmis (md_kup_soll) est réduit à la valeur zéro pendant une durée définissable (t_ra_red) en même temps que la valeur du couple de sortie du moteur est réduite à zéro.

12. Procédé selon la revendication 11,
**caractérisé en ce qu'**
à la suite de la réduction du couple de sortie du moteur

- les instruments de coordination (2021) de l'étage excitateur du moteur (2022) définissent des valeurs de consigne (n_m_soll) pour régler une vitesse de rotation de sortie du moteur ou d'entrée de la boîte de vitesses lorsque l'embrayage assisté (2026) est essentiellement ouvert et/ou

la modification du rapport de boîte se produit en débrayant un rapport initial et en embrayant un rapport cible et les instruments de coordination (2021) de l'étage excitateur (2022) définissent ensuite des valeurs de consigne (n_m_soll) pour régler une vitesse de rotation de sortie du moteur ou d'entrée de la boîte de vitesses lorsque le rapport initial est débrayé dans la boîte de vitesses (2027).

13. Procédé selon la revendication 11,
**caractérisé en ce que**
de premières informations relatives à l'état de fonctionnement de l'embrayage assisté (2026) et/ ou de deuxièmes informations sur l'état de fonctionnement de la boîte de vitesses (2027) sont transmises aux instruments de coordination (2021) et **en ce que** les instruments de coordination (2021) de l'étage excitateur du moteur (2022) définissent, en fonction des premières et/ou des deuxièmes informations :

- soit des valeurs de consigne (md_ke_soll) pour régler un couple de sortie du moteur ou d'entrée de l'embrayage
- soit des valeurs de consigne (n_m_soll) pour régler une vitesse de rotation de sortie du moteur ou d'entrée de la boîte de vitesses.

**14.** Procédé selon la revendication 11,
   **caractérisé en ce que**
   les valeurs de consigne (n_m_soll, $n^{soll}$) pour régler une vitesse de rotation de sortie du moteur ou d'entrée de l'embrayage sont définies de manière à définir une courbe de consigne (KD_n_soll) des valeurs de consigne (n_m_soll, $n^{soll}$) pour régler une vitesse de rotation de sortie du moteur ou d'entrée de la boîte de vitesses.

**15.** Procédé selon la revendication 11,
   **caractérisé en ce que**
   la modification du rapport de boîte se produit en débrayant un rapport initial et en embrayant un rapport cible, et les instruments de coordination (2021) de l'étage excitateur (2023) de l'embrayage définissent les valeurs de consigne (md_ke_soll) pour régler un couple d'embrayage transmissible maximum de sorte que le couple d'embrayage maximum transmissible augmente à une valeur définie ou définissable (md_targ), dans lequel il est notamment prévu qu'une première courbe (KD_MK_soll) est définie en prévoyant que la première variation dans le temps définissable de la réduction dépend :

- des rapports initial et cible,
- de l'exigence de puissance et/ou de couple du conducteur,
- de la vitesse du véhicule,
- du type de véhicule,
- de la situation de conduite et/ou
- de l'état de fonctionnement l'ensemble, par exemple en fonction de la température du moteur et/ou de l'embrayage.

**16.** Procédé selon la revendication 11,
   **caractérisé en ce que**
   les valeurs de consigne (n_m_soll, $n^{soll}$) pour régler une vitesse de rotation de sortie du moteur ou d'entrée de l'embrayage sont définies de sorte qu'une deuxième courbe (KD_n_soll) des valeurs de consigne (n_m_soll, $n^{soll}$) est définie pour régler une vitesse de rotation de sortie du moteur ou d'entrée de la boîte de vitesses.

Fig.1

EP 1 046 001 B1

# Fig.2

Koordinator Fahrzeug — 201

md_an_soll!
md_na
md_anv_soll

md_an_soll!

md_na
md_anv_soll!

202

Antrieb

Koordinator Antrieb

Motor   Kupplung   Getriebe

203

Fahrzeug-Bewegung

Koordinator

md_an_soll

Fahrpedal   Fahr-automat

204

Elektrisches Bordnetz/ Karosserie und Innenraum

Legende

Quellkomponente — Informationsfluss → Zielkomponente

EP 1 046 001 B1

**Fig.3**

Koordinator Fahrzeug — 201

202

md_an_soll

md_an_soll

203

**Antrieb**

md_ga_soll !

Koordinator Antrieb

Schalt-Manager — 2021

Schaltvorgang ?
Drehzahlforderung ?
Leerlaufforderung ?
md_ke_soll ?
md_mv_soll ?
n_m_soll ?

Schaltverhinderung?
g_stat ?

Schaltvorgang?
md_ka_soll?

2024

Motor-Treiber — 2022

Kupplungs-Treiber — 2023

Getriebe-Treiber

? !

? !

? !

Motor — 2025

Kupplung — 2026

Getriebe — 2027

**Fahrzeug-Bewegung**

Koordinator

md_an_soll!

Fahrpedal

Fahr-automat

EP 1 046 001 B1

# Fig.4

Schaltvorgang

| Momentenreduktion | Gangwechsel | Momentenaufbau |
|---|---|---|
| Gang k eingelegt | Kein Gang eingelegt | Gang 1 eingelegt |

Getriebe
akzeptiert Ganganforderung
g_ziel = 1

Anforderung Gang 1
vom Getriebe

Zeit t

EP 1 046 001 B1

**Fig.5**

Motordrehzahl

Antriebsmoment

$T_{red}$

$T_{gw}$

$T_{auf}$

$T_{schalt}$

t

Dauer der Phasen :

$T_{schalt}$ : Schaltvorgang

$T_{red}$  : Momentenreduktion

$T_{gw}$  : Gangwechsel

$T_{auf}$ . : Momentenaufbau

$T_{schalt}$ = $T_{red}$ + $T_{gw}$ + $T_{auf}$

Kupplung 2026

Momentenreduktion

Stelle (md_ka.soll)!

Kupplungs-treiber 2023

Motor 2025

Stelle (md_ma.soll)!

Motortreiber 2022

Ist_svg ?
Gib.md.ke.soll?

Ist_svg ?
Gib_md_ka.soll?

Schaltmanager 2021

Wenn g!=g_ziel, dann B_svg=true. Momentenreduktion

Gib_q?
Gib_ g_ziel ?

Getriebe 2027

Stelle(g_soll)!

Getriebe-treiber 2024

Stelle(md.ga.soll)!

Calc(md_ga.soll)!

Stelle(md.ga.soll)!

Stelle!

Koordinator-Antrieb

Stelle md_ga.soll)!

Fig.6a

EP 1 046 001 B1

2024  2027  2021  2022  2025  2023  2026

| Koordinator-Antrieb | Getriebe-treiber | Getriebe | Schaltmanager | Motortreiber | Motor | Kupplungs-treiber | Kupplung |

Calc(md_ga_soll)!

Ist_n_ford?

Gib n_ge_soll?

Wenn Kupplung offen oder Getriebe n_ford, dann Drehzahlregel.

Ist_offen?

Stelle(md_ga_soll)!

Ist_svg?,Ist_n_ford?

Gib_n_m_soll ?

Stelle(n_m_soll)!

Stelle!

Ist_svg ?

Gib_md_ka_soll ?

Stelle(md_ka_soll)!

Drehzahlregelung

Fig.6b

| Koordinator-Antrieb | Getriebe treiber | Getriebe | Schaltmanager | Motortreiber | Motor | Kupplungs-treiber | Kupplung |
|---|---|---|---|---|---|---|---|
| | 2024 | 2027 | 2021 | 2022 | 2025 | 2023 | 2026 |

Calc(md_ga_soll)!

Ist_n_ford?

Wenn nicht Getriebe.n_ford.d. Momentenaufbau

Stelle (md_ga_soll)!

Ist_svg ?

Stelle (md_ma_soll)!

Gib_md_ke_soll?

Stelle !

Ist_svg?

Gib_md_ka_soll?

Stelle(md.ka.soll)!

Calc(md_ga_soll)!

Wenn Ziel-moment erreicht, dann B_svg=false, Normalbetrieb

Stelle (md_ga_soll)!

Gib_mue?

Stelle (md_ma_soll)!

Gib(md_ke_soll)!

Stelle (md_ke_soll)!

Stelle (md_ka_soll)!

Momentenaufbau

Normalbetrieb

**Fig.6c**

$$\frac{d(md)}{dt} = md\_dot\_red$$

**Fig.7**

$$\frac{d(md)}{dt} = md\_dot\_red$$

**Fig.8**

Fig.9

Fig.10

Fig.11

Fig.12

Fig.13

Fig.14

Fig.15

Zeitintervall-vorgabe

$\triangle t_1$

$\triangle t_n$

$t_k$

Adaption

Auswertung

KL_n_soll

$t_k$

Adaption

Auswertung

KL_Mk_soll

$n_k^{soll}$  $n_{k+1}^{soll}$  $\cdots$  $n_{k+n}^{soll}$

$M_{K,k}^{soll}$  $M_{K,k+1}^{soll}$  $\cdots$  $M_{K,k+n}^{soll}$

$M_V$

$n_k$

$M_{K,k}$

Berechnung des erforderlichen

indizierten Moments

$M_1$

Berechnung

$M_{K,k}$

EP 1 046 001 B1